# EUROPEAN PATENT APPLICATION

(11) **EP 4 269 097 A1**
(43) Date of publication of application: **01.11.2023**
(21) Application number: 21910734.9
(22) Date of filing: 20.12.2021
(51) Int. Cl.: B32B 27/18, C01G 41/00, C03C 27/12, B60J 1/00, B32B 7/023

(54) **LAMINATED STRUCTURE FOR SOLAR RADIATION SHIELDING**

(30) Priority: 24.12.2020 JP 2020215132
(71) Applicant: SUMITOMO METAL MINING CO., LTD., Tokyo 105-8716 (JP)
(72) Inventor: SAKO, Mika, Isa-shi, Kagoshima 895-2501 (JP); CHONAN, Takeshi, Isa-shi, Kagoshima 895-2501 (JP)
(74) Representative: Jones, Nicholas Andrew
(86) International application number: PCT/JP2021/047087
(87) International publication number: WO 2022/138591

(57) **Abstract**

Provided is a laminated structure for solar radiation shielding, including: two laminated plates selected from glass plates and plate-shaped plastics; and an intermediate layer provided between the two laminated plates, wherein one or more members selected from the laminated plates and the intermediate layer contain solar radiation shielding function material particles, and the solar radiation shielding function material particles contain particles of a complex tungsten oxide represented by General Formula: MₓW_{y}O_{z} (where an element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, 0.001≤x/y≤1, and 3.0<z/y).

## Description

### TECHNICAL FIELD

The present invention relates to a laminated structure for solar radiation shielding.

### BACKGROUND OF THE INVENTION

Hitherto, as safety glass used on, for example, automobiles, a laminated structure for solar radiation shielding, which is in the form of laminated glass in which a solar radiation shielding layer is sandwiched between two glass plates, has been proposed. Such a laminated structure for solar radiation shielding aims for shielding incident solar energy and relieving load on the cooling system and people feeling hot.

For example, Patent Document 1 discloses laminated glass in which a soft resin layer containing a hot-ray-shielding metal oxide, which is any of tin oxide and indium oxide having a particle diameter of 0.1 um or less, is interposed between a pair of glass plates.

Patent Document 2 discloses laminated glass including an intermediate film layer between at least two transparent glass plates, wherein functional ultraminute particles having a particle diameter of 0.2 um or less are dispersed in the intermediate film layer. Examples of the functional ultraminute particles disclosed include: single substances selected from Sn, Ti, Si, Zn, Zr, Fe, Al, Cr, Co, Ce, In, Ni, Ag, Cu, Pt, Mn, Ta, W, V, and Mo metals, and oxides, nitrides, sulfides, and Sb- or F-doped products of these metals; complex substances formed of two or more selected from the single substances; and mixtures containing organic resin substances in the single substances or the complex substances, or coated products obtained by coating the single substances or the complex substances with organic resin substances.

However, the existing examples of laminated glass disclosed in Patent Document 1 and Patent Document 2 both have a problem that their solar radiation shielding performance is not sufficient when a high visible light transmittance is needed.

Hence, the applicant has proposed a laminated structure for solar radiation shielding, in which an intermediate layer containing, as minute particles having a solar radiation shielding function, either or both of minute particles of tungsten oxide represented by General Formula: W_{y}O_{z} (where W represents tungsten, O represents oxygen, and 2.0<x/y<3.0) and minute particles of complex tungsten oxide represented by General Formula: MₓW_{y}O_{z} (where W represents tungsten, O represents oxygen, 0.001≤x/y≤1, and 2.0<z/y≤3.0) is interposed between two laminated plates selected from glass plates, plastics, and plastics containing particles having a solar radiation shielding function. As described in Patent Document 3, all kinds of laminated glass for solar radiation shielding, to which complex tungsten oxide particles are applied, have been improved to a solar radiation transmittance of lower than 50.0% at a visible light transmittance of 76.0% or lower.

### RELATED-ART DOCUMENT

### Patent Document

Patent Document 1: Japanese Patent Application Laid-Open No. 08-217500
Patent Document 2: Japanese Patent Application Laid-Open No. 08-259279
Patent Document 3: International Publication No. WO 2005/087680

### SUMMARY OF THE INVENTION

### Problems to be Solved by the Invention

However, in recent years, properties such as weather resistance have become needed properties of the laminated structures of solar radiation shielding.

According to an aspect of the present invention, it is an object to provide a laminated structure for solar radiation shielding, which has near infrared absorbability and visible light transmissivity, and is excellent in weather resistance.

### Means for Solving the Problems

According to an aspect of the present invention, there is provided a laminated structure for solar radiation shielding, the laminated structure including:
two laminated plates selected from glass plates and plate-shaped plastics; and
an intermediate layer provided between the two laminated plates,
wherein one or more members selected from the laminated plates and the intermediate layer contain solar radiation shielding function material particles, and
the solar radiation shielding function material particles contain particles of a complex tungsten oxide represented by General Formula: MₓW_{y}O_{z} (where an element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W represents tungsten, O represents oxygen, 0.001≤x/y≤1, and 3.0<z/y).

### Effects of the Invention

According to an aspect of the present invention, it is possible to provide a laminated structure for solar radiation shielding, which has near infrared absorbability and visible light transmissivity, and is excellent in weather resistance.

### BRIEF DESCRIPTION OF THE DRAWINGS

[FIG. 1] FIG. 1 is a view illustrating a hybrid plasma reactor used in Example 1.
[FIG. 2] FIG. 2 is a view illustrating a high-frequency plasma reactor used in Example 2.
[FIG. 3] FIG. 3 is a cross-sectional view illustrating a configuration example of a laminated structure for solar radiation shielding.
[FIG. 4] FIG. 4 is a cross-sectional view illustrating another configuration example of a laminated structure for solar radiation shielding.
[FIG. 5] FIG. 5 is a cross-sectional view illustrating another configuration example of a laminated structure for solar radiation shielding.
[FIG. 6] FIG. 6 is a cross-sectional view illustrating another configuration example of a laminated structure for solar radiation shielding.
[FIG. 7] FIG. 7 is a cross-sectional view illustrating another configuration example of a laminated structure for solar radiation shielding.
[FIG. 8] FIG. 8 is a cross-sectional view illustrating another configuration example of a laminated structure for solar radiation shielding.
[FIG. 9A] FIG. 9A is a cross-sectional view illustrating another configuration example of a laminated structure for solar radiation shielding.
[FIG. 9B] FIG. 9B is a cross-sectional view illustrating another configuration example of a laminated structure for solar radiation shielding.
[FIG. 9C] FIG. 9C is a cross-sectional view illustrating another configuration example of a laminated structure for solar radiation shielding.
[FIG. 10] FIG. 10 is a cross-sectional view illustrating another configuration example of a laminated structure for solar radiation shielding.

### DETAILED DESCRIPTION OF THE INVENTION

First, solar radiation shielding function material particles that can be suitably used in a laminated structure for solar radiation shielding according to an embodiment, and a method for producing the same will be described under "1. Solar radiation shielding function material particles" and "2. Method for producing solar radiation shielding function material particles". Next, the laminated structure for solar radiation shielding according to the present embodiment, and a method for producing, for example, a dispersion liquid that can be used when producing the laminated structure for solar radiation shielding will be described in detail under "3. Laminated structure for solar radiation shielding" and "4. Method for producing dispersion liquid, adding liquid, and coating liquid of solar radiation shielding function material particles".

### 1. Solar radiation shielding function material particles

Solar radiation shielding function material particles according to the present embodiment can contain particles of a complex tungsten oxide represented by General Formula: MₓW_{y}O_{z}.

In the above General Formula, the element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I. W represents tungsten. O represents oxygen, x, y, and z can satisfy 0.001≤x/y≤1, and 3.0<z/y.

In order to obtain a laminated structure for solar radiation shielding excellent in weather resistance, one may consider making the solar radiation shielding function material particles to be used excellent in weather resistance. Hence, the present inventors have conducted earnest studies in order to make the solar radiation shielding function material particles excellent in weather resistance. In the present specification, excellent weather resistance represents near infrared absorbability that would not significantly change even in a high-temperature environment.

In general, materials containing free electrons are known to exhibit plasma oscillation-induced reflection and absorption responses to electromagnetic radiations having a wavelength of from 200 nm through 2,600 nm, which is around the solar ray range. It is known to be able to obtain visible light transparency through powders of these free electron-containing materials, provided that the particles are smaller than the light wavelength, because the visible light (having a wavelength of 380 nm or longer and 780 nm or shorter) is less geometrically scattered by such particles. In the present specification, "transparency" is used to mean a high transmissivity and scarce scattering of light in the visible light range.

Tungsten oxide represented by General Formula WO₃₋ₐ, and what is generally referred to as tungsten bronze obtained by adding an electropositive element such as Na to tungsten trioxide are conductive materials, and are known as free electron-containing materials. Analyses of, for example, single crystals of these materials suggest free electrons' responses to light in the near infrared range.

In general, tungsten trioxide (WO₃), in which effective free electrons are absent, thus has a poor near infrared absorbability and reflectivity, and is not effective as a near infrared absorbing material. Here, reducing the ratio of oxygen to tungsten in tungsten trioxide to less than 3 is known to produce free electrons in the tungsten oxide.

Moreover, it has been an existing practice to add an element M to the tungsten oxide to produce a complex tungsten oxide, because free electrons are produced in the thusly formulated complex tungsten oxide, which hence expresses free electron-attributable absorbability to the near infrared range, and is effective as a material for absorbing near infrared around a wavelength of 1,000 nm.

The present inventors have conducted additional studies into tungsten oxide and complex tungsten oxide in order to obtain solar radiation shielding function material particles excellent in weather resistance. As a result, the present inventors have found it possible to make both of near infrared absorbability and weather resistance be satisfied in solar radiation shielding function material particles containing particles of a complex tungsten oxide represented by General Formula: MₓW_{y}O_{z}, by adjusting y and z in the above General formula to 3.0<z/y, and have completed the present invention.

The solar radiation shielding function material particles according to the present embodiment can contain particles of a complex tungsten oxide represented by General Formula: MₓW_{y}O_{z} as described above. The solar radiation shielding function material particles according to the present embodiment may be constituted by particles of a complex tungsten oxide represented by the above General Formula. However, also in this case, it is not intended to exclude the solar radiation shielding function material particles containing unavoidable components that may mix during, for example, a production process.

Here, in terms of enhancing safety, the element M in the above General Formula is preferably one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I as described above. Particularly, in terms of noticeably improving optical properties to qualify as a near infrared absorbing material and weather resistance, the element M is more preferably an element belonging to alkali metals, alkaline-earth metal elements, transition metal elements, the Group 4B elements, and the Group 5B elements.

When the particles of the complex tungsten oxide contain a crystal having a hexagonal crystal structure, the particles have a noticeably improved visible light transmittance, and a noticeably improved near infrared absorption. A hexagonal crystal structure is an assembly of a multitude of units, in each of which, six octahedrons, each of which is formed of WO₆ units, are assembled and form a hexagonal void (tunnel), and the element M is seated in the void.

The particles of the complex tungsten oxide are not limited to containing the crystal having the hexagonal crystal structure. So long as the particles of the complex tungsten oxide have, for example, the unit structure described above, i.e., a structure in which six octahedrons, each of which is formed of WO₆ units, are assembled and form a hexagonal void, and the element M is seated in the void, visible light transmittance can be noticeably improved, and near infrared absorption can be noticeably improved. Hence, the particles of the complex tungsten oxide can obtain high effects even without containing the crystal having the hexagonal crystal structure, but only by having the unit structure.

As described above, when the particles of the complex tungsten oxide have the structure in which the electropositive ion of the element M is added in the hexagonal void, near infrared absorption is noticeably improved. Here, in general, when an element M having a large ionic radius is added, the hexagonal crystal or the structure described above is likely to be formed. Specifically, when the complex tungsten oxide contains one or more elements selected from Cs, Rb, K, Tl, In, Ba, Li, Ca, Sr, Fe, and Sn as the element M, the complex tungsten oxide is likely to have the hexagonal crystal or the structure described above. Hence, it is preferable that the particles of the complex tungsten oxide contain one or more elements selected from Cs, Rb, K, Tl, In, Ba, Li, Ca, Sr, Fe, and Sn as the element M, and it is more preferable that the element M be one or more elements selected from Cs, Rb, K, Tl, In, Ba, Li, Ca, Sr, Fe, and Sn.

Moreover, when the particles of the complex tungsten oxide contain one or more selected from Cs and Rb among these elements M having a large ionic radius, the particles of the complex tungsten oxide are likely to have the hexagonal crystal or the structure described above, and can satisfy both of near infrared absorption and visible light transmission and exhibit a particularly high performance.

When the particles of the complex tungsten oxide having the hexagonal crystal structure have a uniform crystal structure, x/y, which indicates the content ratio of the element M to 1 mole of tungsten, is preferably 0.2 or greater and 0.5 or less, and more preferably 0.33. When x/y is 0.33, it is inferred that the element M is seated in all hexagonal voids.

The particles of the complex tungsten oxide are effective as the near infrared absorbing material, also when the particles contain a crystal other than the hexagonal crystal described above, such as a tetragonal crystal and a cubic crystal.

The addition amount of the element M in the complex tungsten oxide, regardless of whether the complex tungsten oxide contains the cubic crystal or the tetragonal crystal, has a preferable range and an upper limit that are attributable to the structure of the cubic crystal and the tetragonal crystal. The upper limit of x/y, which is the content ratio of the element M to 1 mole of tungsten, is 1 mole in the cubic crystal, and approximately 0.5 moles in the tetragonal crystal. The upper limit of x/y, which is the content ratio of the element M to 1 mole of tungsten, is different depending on, for example, the type of the element M. It is easy to industrially produce the tetragonal crystal, when the upper limit of x/y is approximately 0.5 moles.

However, because briefly defining these structures can involve complications, and the ranges in question are examples that specify quite basic ranges, the present invention is not to be limited to these ranges.

There is a tendency that the position in the near infrared range at which near infrared is absorbed by the particles of the complex tungsten oxide varies depending on the structure of the crystal contained in the particles. There is a tendency that the near infrared absorption position of the tetragonal crystal is at a longer wavelength side than that of the cubic crystal, and the near infrared absorption position of the hexagonal crystal is at an even longer wavelength side than that of the tetragonal crystal. Moreover, along with the absorption position variation, the hexagonal crystal has the minimum visible light absorption, the tetragonal crystal has the next minimum visible light absorption, and the cubic crystal has the maximum visible light absorption among these crystals. Therefore, it is preferable to select the crystal system to be contained, depending on, for example, the required performance. For example, when used for a purpose in which it is necessary to transmit visible light as much as possible and absorb near infrared light as much as possible, it is preferable that the particles of the complex tungsten oxide contain the hexagonal crystal. However, the tendencies of the optical properties described here are general tendencies in the true sense of the term, and the optical properties may vary depending also on the type and addition amount of the element added, and oxygen level. Hence, the present invention is not to be limited to the optical properties.

By applying control of the aforementioned oxygen level and addition of the free electron-producing element M both to the complex tungsten oxide, it is possible to obtain a more efficient near infrared absorbing material having excellent weather resistance. When the general formula of the complex tungsten oxide, which is the near infrared absorbing material to which both the oxygen level control and addition of the free electron-producing element are applied, is expressed as MₓW_{y}O_{z}, x and y may be defined as 0.001≤x/y≤1, and it is preferable that x and y satisfy 0.20≤x/y≤0.37.

In the General Formula described above, y and z satisfy 3.0<z/y, and it is preferable that y and z satisfy 3.0<z/y<3.4, more preferably 3.0<z/y<3.3, and yet more preferably 3.0<z/y<3.22.

According to the applicant's studies, it is considered that the element M will be seated in all hexagonal voids in the complex tungsten oxide particles having the hexagonal crystal structure, when the value x/y is 0.33 when z/y=3.

It has been confirmed by chemical analyses that z/y is greater than 3 in the complex tungsten oxide particles contained in the solar radiation shielding function material particles according to the present embodiment. In the meantime, it has been confirmed by powder X-ray diffractometry that the complex tungsten oxide particles contained in the solar radiation shielding function material particles according to the present embodiment may assume a tungsten bronze structure of at least any selected from a tetragonal crystal, a cubic crystal, and a hexagonal crystal, when z/y=3. Accordingly, it is preferable that the particles of the complex tungsten oxide contained in the solar radiation shielding function material particles according to the present embodiment contain a crystal having one or more crystal structures selected from a hexagonal crystal, a tetragonal crystal, and a cubic crystal. By containing the crystal having the crystal structures described above, the particles of the complex tungsten oxide can exhibit noticeably excellent near infrared absorbability and visible light transmissivity.

When the z/y value is greater than 3, it is considered that the oxygen atoms are incorporated in the crystal of the particles of the complex tungsten oxide. It is considered that the consequent incorporation of the oxygen atoms in the crystal can realize excellent weather resistance in the particles of the complex tungsten oxide, without degeneration of the crystal even when exposed to heat or humidity.

The crystal structure of the particles of the complex tungsten oxide contained in the solar radiation shielding function material particles according to the present embodiment can be confirmed based on an X-ray diffraction pattern by powder X-ray diffractometry (Θ-2Θ method).

The solar radiation shielding function material particles according to the present embodiment exhibits light transmissivity of which the local maximum value is in the wavelength range of 350 nm or longer and 600 nm or shorter, and of which the local minimum value is in the wavelength range of 800 nm or longer and 2,100 nm or shorter, and can exhibit an excellent near infrared absorbing effect and weather resistance. It is preferable that the solar radiation shielding function material particles according to the present embodiment have a local maximum value in the wavelength range of 440 nm or longer and 600 nm or shorter, and a local minimum value in the wavelength range of 1,150 nm or longer and 2,100 nm or shorter.

The particle diameter of the solar radiation shielding function material particles according to the present embodiment is preferably 100 nm or less. In terms of exhibiting an even better near infrared absorbability, the particle diameter is more preferably 10 nm or greater and 100 nm or less, more preferably 10 nm or greater and 80 nm or less, particularly preferably 10 nm or greater and 60 nm or less, and the most preferably 10 nm or greater and 40 nm or less. When the particle diameter of the solar radiation shielding function material particles is in the range of 10 nm or greater and 40 nm or less, the best near infrared absorbability is exhibited.

Here, the particle diameter represents the diameter of the individual solar radiation shielding function material particles that do not aggregate, i.e., the particle diameter of each individual particle.

The particle diameter here does not include the diameter of an aggregate of the solar radiation shielding function material particles, and is different from a dispersed particle diameter.

The particle diameter here can be calculated based on, for example, particle diameters of a plurality of particles measured by using, for example, a transmission electron microscope (TEM) in a state in which the solar radiation shielding function material particles are dispersed. Because the solar radiation shielding function material particles typically have indefinite shapes, the diameter of the minimum circumscribed circle of the particles may be used as the particle diameter of the particles. For example, when particle diameters of a plurality of particles are measured per particle as described above by using, for example, a transmission electron microscope, it is preferable that all of these particles satisfy the above-specified particle diameter range. The number of particles to be measured is not particularly limited, and is preferably, for example, 10 or greater and 50 or less.

In terms of exhibiting excellent near infrared absorbability, the crystallite size of the complex tungsten oxide particles is preferably 10 nm or greater and 100 nm or less, more preferably 10 nm or greater and 80 nm or less, yet more preferably 10 nm or greater and 60 nm or less, and particularly preferably 10 nm or greater and 40 nm or less. This is because noticeably excellent near infrared absorbability is exhibited when the crystallite size is in the range of 10 nm or greater and 40 nm or less. The crystallite size of the complex tungsten oxide particles contained in the solar radiation shielding function material particles can be calculated by the Rietveld method based on an X-ray diffraction pattern measured by powder X-ray diffractometry (Θ-2Θ method).

The general formula of the complex tungsten oxide contained in the complex tungsten oxide particles is defined as MₓW_{y}O_{z} as described above. When the element M contains one or more elements selected from Cs and Rb and the complex tungsten oxide has the hexagonal crystal structure, the lattice constant of a-axis of the complex tungsten oxide is preferably 7.3850 angstroms or greater and 7.4186 angstroms or less, and the lattice constant of c-axis of the complex tungsten oxide is preferably 7.5600 angstroms or greater and 7.6240 angstroms or less. The complex tungsten oxide having the specified lattice constants can realize noticeably excellent performance in near infrared absorbability and weather resistance. In the case described above, it is preferable that the element M be formed of one or more elements selected from Cs and Rb. The lattice constants can be calculated by using the Rietveld method.

Because a solar radiation shielding function material particle dispersion containing the particles of the complex tungsten oxide according to the present embodiment heavily absorbs the near infrared range, particularly, light around the wavelength of 1,000 nm, the transmitted light often has a blue or green color tone.

The dispersed particle diameter of the solar radiation shielding function material particles according to the present embodiment may be selected variously in accordance with the purpose for which the particles are used. When used in an application in which transparency is maintained, it is preferable that the solar radiation shielding function material particles have a dispersed particle diameter of 800 nm or less. This is because particles having a dispersed particle diameter of 800 nm or less do not completely scatter and shield light, and can keep the visible light range visible and can efficiently maintain transparency at the same time.

When transparency of the visible light range is particularly important, it is preferable to take into consideration scattering by the particles. The dispersed particle diameter includes the diameter of an aggregate of the solar radiation shielding function material particles, and is different from the particle diameter described above.

When reducing scattering by the particles is important, the dispersed particle diameter of the solar radiation shielding function material particles according to the present embodiment is preferably 200 nm or less, more preferably 10 nm or greater and 200 nm or less, and yet more preferably 10 nm or greater and 100 nm or less. This is because when the dispersed particle diameter is small, light in the visible light range having a wavelength of 380 nm or longer and 780 nm or shorter is less geometrically scattered or Mie-scattered, and a dispersion containing the solar radiation shielding function material particles according to the present embodiment can avoid being unable to obtain a clear transparency through becoming like frosted glass, i.e., because a dispersed particle diameter of 200 nm or less is in the Rayleigh scattering region in which light is less geometrically scattered or Mie-scattered as described above, and light to be scattered is proportional to the sixth power of the dispersed particle diameter, meaning reduction of light to be Rayleigh-scattered and improvement of transparency along with reduction of the dispersed particle diameter. Moreover, a dispersed particle diameter of 100 nm or less is preferable because there is very scarce light to be scattered. In terms of avoiding scattering of light, a smaller dispersed particle diameter is more preferable, and it is easy to industrially produce particles having a dispersed particle diameter of 10 nm or greater.

By adjusting the dispersed particle diameter to 800 nm or less, it is possible to adjust the haze (haze value) of the solar radiation shielding function material particle dispersion obtained by dispersing the solar radiation shielding function material particles in a medium to 10% or lower at a visible light transmittance of 85% or lower. Particularly, when the dispersed particle diameter is 100 nm or less, the haze can be 1% or lower.

Scattering of light by the solar radiation shielding function material particle dispersion need be considered in terms of aggregation of the solar radiation shielding function material particles, and need be studied in terms of the dispersed particle diameter.

### 2. Method for producing solar radiation shielding function material particles

An example of formulation of a method for producing the solar radiation shielding function material particles will be described. According to the method for producing the solar radiation shielding function material particles of the present embodiment, it is possible to produce the solar radiation shielding function material particles described above. Hence, descriptions of some of the particulars already described will be omitted.

The complex tungsten oxide particles represented by the above General Formula MₓW_{y}O_{z} and contained in the solar radiation shielding function material particles according to the present embodiment can be produced by, for example, a solid phase reaction method and a plasma process that are described below.

Each method will be described below.

### (1) Solid phase reaction method

When producing the complex tungsten oxide particles by the solid phase reaction method, the method may include the following steps.

A tungsten compound and an element M compound are mixed, to prepare a raw material mixture (mixing step). It is preferable to blend and mix the raw materials such that the amount-of-substance ratio (mole ratio) of the element M to tungsten in the raw material mixture becomes the intended ratio of x to y in the above General Formula representing the particles of the complex tungsten oxide.

The raw material mixture obtained in the mixing step is thermally treated in an atmosphere containing oxygen (first thermal treatment step).

The thermally treated product obtained in the first thermal treatment step is thermally treated in a reducing gas atmosphere or a mixture gas atmosphere of a reducing gas and an inert gas, or in an inert gas atmosphere (second thermal treatment step).

After the second thermal treatment step, the solar radiation shielding function material particles may be subjected to, for example, a pulverizing process as needed, such that the particles become a desired particle diameter.

The solar radiation shielding function material particles according to the present embodiment containing the complex tungsten oxide particles obtained through the steps described above have a sufficient near infrared absorbing power, and favorable properties as the solar radiation shielding function material particles. Moreover, the solar radiation shielding function material particles can be excellent in weather resistance.

Each step will be described in detail below.

### (Mixing step)

As the tungsten compound to be fed to the mixing step, one or more selected from, for example, tungstic acid (H₂WO₄), ammonium tungstate, tungsten hexachloride, and tungsten hydrate obtained by adding water to tungsten hexachloride dissolved in an alcohol to hydrolyze tungsten hexachloride, and then evaporating the solvent from the resulting product, can be used.

As the element M compound to be fed to the mixing step, one or more selected from, for example, oxide, hydroxide, nitrate, sulfate, chloride, and carbonate of the element M can be used.

When mixing the tungsten compound and the element M compound in the mixing step, it is preferable to blend and mix the raw materials such that the amount-of-substance ratio (M:W) of the element M (M) to tungsten (W) in the raw material mixture to be obtained becomes equal to the intended x:y in the General Formula MₓW_{y}O_{z}.

The mixing method is not particularly limited, and either of wet mixing and dry mixing can be used. In the wet mixing, it is possible to obtain a mixture powder of the element M compound and the tungsten compound, by drying the mixture liquid obtained through the wet mixing. The drying temperature and time after the wet mixing are not particularly limited.

The dry mixing may be performed with a publicly known mixing machine such as a grinding machine, a kneader, a ball mill, a sand mill, and a paint shaker that are commercially available. The mixing conditions such as the mixing time and the mixing speed are not particularly limited.

### (First thermal treatment step)

The thermal treatment temperature in the first thermal treatment step is not particularly limited, but is preferably higher than the temperature at which the complex tungsten oxide particles crystallize. Specifically, the thermal treatment temperature is preferably 500°C or higher and 1,000°C or lower and more preferably 500°C or higher and 800°C or lower.

### (Second thermal treatment step)

In the second thermal treatment step, the thermal treatment may be performed in a reducing gas atmosphere or a mixture gas atmosphere of a reducing gas and an inert gas, or in an inert gas atmosphere as described above at a temperature of 500°C or higher and 1,200°C or lower.

When using a reducing gas in the second thermal treatment step, the type of the reducing gas is not particularly limited, but hydrogen (H₂) is preferable. When hydrogen is used as the reducing gas, the concentration of the reducing gas may be appropriately selected in accordance with, for example, the firing temperature and the quantities of the starting raw materials, and is not particularly limited. For example, the concentration of the reducing gas is 20vol% or lower, preferably 10vol% or lower, and more preferably 7vol% or lower. This is because when the concentration of the reducing gas is 20vol% or lower, it is possible to avoid WO₂, which does not have the solar radiation shielding function, being produced due to rapid reduction.

### (2) Plasma process

The complex tungsten oxide particles represented by the above General Formula MₓW_{y}O_{z} and contained in the solar radiation shielding function material particles according to the present embodiment can also be produced by, for example, a plasma process. When producing the solar radiation shielding function material particles by a plasma process, the process may include the following steps.

As the starting raw material, a raw material mixture of a tungsten compound and an element M compound, or a complex tungsten oxide precursor represented by General Formula MₓW_{y}O_{z'} is prepared (raw material preparing step).

The starting raw material prepared in the raw material preparing step is fed into a plasma together with a carrier gas, to produce the intended complex tungsten oxide particles through evaporation and condensation (reaction step) .

### (Raw material preparing step)

When preparing a raw material mixture of a tungsten compound and an element M compound as the starting raw material, it is preferable to blend and mix the raw materials such that the amount-of-substance ratio (M:W) of the element M (M) to tungsten (W) in the raw material mixture of the tungsten compound and the element M compound becomes equal to the ratio x:y of x to y in the above General Formula representing the intended complex tungsten oxide.

Descriptions of the tungsten compound and the element M compound will be omitted here, because the same materials as those described in the solid phase reaction method can be suitably used.

In the complex tungsten oxide precursor represented by the General Formula MₓW_{y}O_{z'}, M may be the element M described above, W may be tungsten, and O may be oxygen, and it is preferable that x, y, and z' satisfy 0.001<x/y≤1 and 2.0<z'/y.

The complex tungsten oxide precursor represented by the General Formula MₓW_{y}O_{z} can be synthesized by, for example, the solid phase reaction method described above. It is preferable that such a complex tungsten oxide precursor is a material having x/y that matches x/y in the particles of the intended complex tungsten oxide represented by the General Formula MₓW_{y}O_{z}.

### (Reaction step)

In the reaction step, a mixture gas of an inert gas and an oxygen gas can be used as the carrier gas that carries the starting raw material.

A plasma can be generated in an inert gas alone or in a mixture gas atmosphere of an inert gas and a hydrogen gas. The plasma is not particularly limited, but a thermal plasma is preferable. The raw material fed into the plasma momentarily evaporates, and the evaporated raw material condenses through arriving at the plasma flame tail, and rapidly cools and freezes outside the plasma flame, to produce particles of the complex tungsten oxide. By the plasma process, for example, particles of complex tungsten oxide having a single crystal phase can be produced.

As the plasma used in the method for producing the solar radiation shielding function material particles according to the present embodiment, any selected from, for example, any of a direct-current arc plasma, a high-frequency plasma, a microwave plasma, and a low-frequency alternating-current plasma, a superimposed plasma of any of these plasmas, a plasma obtained by an electrical method of applying a magnetic field to a direct-current plasma, a plasma produced by a high-power laser, and a plasma obtained by a high-power electron beam or ion beam is preferable. Regardless of which thermal plasma is used, a thermal plasma having a high-temperature portion of 10000 K or higher, more preferably 10000 K or higher and 25000 K or lower is preferable, and a plasma that can control the time taken to produce particles is particularly preferable.

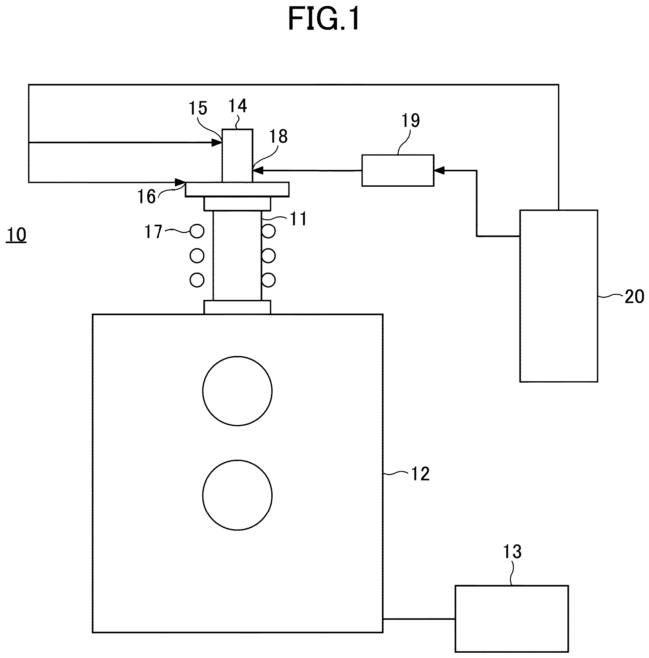

A specific example of a plasma process-based formulation of the reaction step included in the method for producing the solar radiation shielding function material particles according to the present embodiment will be described with reference to FIG. 1.

The device illustrated in FIG. 1 is a hybrid plasma reactor 10 in which a direct-current plasma device and a high-frequency plasma device are superimposed.

The hybrid plasma reactor 10 includes a water-cooling quartz double tube 11, and a reaction chamber 12 coupled to the water-cooling quartz double tube 11. A vacuum pumping device 13 is coupled to the reaction chamber 12.

A direct-current plasma torch 14 is provided above the water-cooling quartz double tube 11, and a plasma generation gas feeding port 15 is provided in the direct-current plasma torch 14.

It is possible to feed a sheath gas for high-frequency plasma generation and quartz tube protection outside the plasma area along the internal wall of the water-cooling quartz double tube 11. A sheath gas introducing port 16 is provided in a flange above the water-cooling quartz double tube 11.

A water-cooling copper coil 17 for high-frequency plasma generation is provided around the water-cooling quartz double tube 11.

A raw material powder carrier gas feeding port 18 is provided near the direct-current plasma torch 14, and is coupled through a duct to a raw material powder feeding device 19 configured to feed a raw material powder.

A gas feeding device 20 is coupled to the plasma generation gas feeding port 15, the sheath gas introducing port 16, and the raw material powder feeding device 19 through ducts, and a predetermined gas can be fed to each member from the gas feeding device 20. Feeding ports may be provided in any portions other than the members described above and may be coupled to the gas feeding device 20, such that the members in the device can be cooled or put under a predetermined atmosphere.

An example of formulation of the method for producing the particles of the complex tungsten oxide using the hybrid plasma reactor 10 described above will be described.

First, the vacuum pumping device 13 vacuum-pumps the interior of the reaction system constituted by the water-cooling quartz double tube 11 and the reaction chamber 12. Here, the degree of vacuum is not particularly limited, but vacuum pumping may be to, for example, approximately 0.1 Pa (approximately 0.001 Torr). After the interior of the reaction system is vacuum-pumped, the gas feeding device 20 can feed an argon gas and fill the reaction system with the argon gas. For example, it is preferable to produce a 1-atm argon gas circulating system in the reaction system.

Subsequently, a plasma gas can further be fed into the reaction chamber 12. The plasma gas is not particularly limited, and any gas selected from, for example, an argon gas, a mixture gas of argon and helium (Ar-He mixture gas), a mixture gas of argon and nitrogen (Ar-N₂ mixture gas), neon, helium, and xenon can be used.

The plasma gas feeding flow rate is not particularly limited. For example, the plasma gas can be introduced through the plasma generation gas feeding port 15 at a flow rate of preferably 3 L/min or higher and 30 L/min or lower and more preferably 3 L/min or higher and 15 L/min or lower. Then, a direct-current plasma can be generated.

In the meantime, a sheath gas for high-frequency plasma generation and quartz tube protection can be fed in a swirling shape to outside the plasma area along the internal wall of the water-cooling quartz double tube 11 through the sheath gas introducing port 16. The type and feeding rate of the sheath gas are not particularly limited. For example, an argon gas of 20 L/min or higher and 50 L/min or lower and a hydrogen gas of 1 L/in or higher and 5 L/min or lower may be flowed, to generate a high-frequency plasma.

A high-frequency power supply can be applied to the water-cooling copper coil 17 for high-frequency plasma generation. The conditions of the high-frequency power supply are not particularly limited. For example, a high-frequency power supply of a frequency of approximately 4 MHz can be applied by 15 kW or higher and 50 kW or lower.

After such a hybrid plasma is generated, the raw material powder feeding device 19 can introduce the raw material through the raw material powder carrier gas feeding port 18, using a carrier gas. The carrier gas is not particularly limited. For example, a mixture gas of an argon gas of 1 L/min or higher and 8 L/min or lower and an oxygen gas of 0.001 L/min or higher and 0.8 L/min or lower can be used.

The raw material mixture or the complex tungsten oxide precursor, which is the starting raw material to be fed into the plasma, is introduced into the plasma to be reacted. The feeding rate of the starting raw material through the raw material powder carrier gas feeding port 18 is not particularly limited. It is preferable to feed the starting raw material at a rate of, for example, 1 g/min or higher and 50 g/min or lower, and more preferably 1 g/min or higher and 20 g/min or lower.

When the feeding rate of the starting raw material is 50 g/min or lower, it is possible to sufficiently increase the proportion of the starting raw material that passes through the central portion of the plasma flame, to inhibit the proportions of unreacted substances and intermediate products, and to increase the probability of generation of the desired complex tungsten oxide particles. When the feeding rate of the starting raw material is 1 g/min or higher, it is possible to increase productivity.

The starting raw material fed into the plasma momentarily evaporates in the plasma and condenses, to produce complex tungsten oxide particles having an average primary particle diameter of 100 nm or less.

The particle diameter of the complex tungsten oxide particles to be obtained by the production method according the present embodiment can be easily controlled based on, for example, plasma output power, plasma flow rate, and the amount of the raw material powder to be fed.

Through the reaction, the produced complex tungsten oxide particles accumulate in the reaction chamber 12, so the accumulated particles can be recovered.

The method for producing the solar radiation shielding function material particles according to the present embodiment has been described above. The solar radiation shielding function material particles obtained by this production method can be evaluated and confirmed by, for example, the method described below.

For example, it is possible to perform chemical quantitative analyses of the constituting elements of the solar radiation shielding function material particles obtained by the method for producing the solar radiation shielding function material particles described above. The analyzing method is not particularly limited. For example, the element M and tungsten can be analyzed by plasma emission spectroscopy, and oxygen can be analyzed by an inert gas impulse heating/melting infrared absorption method.

The crystal structure of the complex tungsten oxide particles contained in the solar radiation shielding function material particles can be confirmed by powder X-ray diffractometry.

The particle diameter of the solar radiation shielding function material particles can be confirmed by measurement of the particle diameter based on TEM observation or dynamic light scattering.

### 3. Laminated structure for solar radiation shielding

Next, a laminated structure for solar radiation shielding according to the present embodiment will be described.

The laminated structure for solar radiation shielding (hereinafter, also referred to as "laminated structure") according to the present embodiment includes two laminated plates selected from glass plates and plate-shaped plastics, and an intermediate layer provided between the two laminated plates. That is, the laminated structure for solar radiation shielding according to the present embodiment has a structure in which the intermediate layer is interposed between the two laminated plates. In the laminated structure for solar radiation shielding according to the present embodiment, one or more members selected from the laminated plates and the intermediate layer may contain solar radiation shielding function material particles. Specifically, either laminated plates or the intermediate layer, or both of the laminated plates and the intermediate layer may contain solar radiation shielding function material particles. When the laminated plates contain solar radiation shielding function material particles, for example, either one of the two laminated plates, or the two laminated plates may contain solar radiation shielding function material particles.

As solar radiation shielding function material particles, the solar radiation shielding function material particles described above can be used. Hence, description of the solar radiation shielding function material particles will be omitted here.

The members included in the laminated structure according to the present embodiment will be described below.

### (1) Laminated plates

In the laminated structure according to the present embodiment, the laminated plates are plates that are laminated while sandwiching the intermediate layer from both sides of the intermediate layer. Glass plates and plate-shaped plastics that are transparent to the visible light range may be used as the laminated plates. Because plate-shaped plastics can contain the solar radiation shielding function material particles described above, plate-shaped plastics containing the solar radiation shielding function material particles can be provided.

In detail, for example, glass plates or plate-shaped plastics that have an optical property of transmitting light of the visible light range therethrough may be used as the laminated plates.

Configurations of the two laminated plates selected from glass plates and plate-shaped plastics described above include a combination of a glass plate and a glass plate, a combination of a glass plate and a plate-shaped plastic, and a combination of a plate-shaped plastic and a plate-shaped plastic. As described above, plate-shaped plastics can contain the solar radiation shielding function material particles. For example, when the two laminated plates are constituted by two plate-shaped plastics, either one of the plate-shaped plastics or the two plate-shaped plastics may contain the solar radiation shielding function material particles.

When a plate-shaped plastic is used as any laminated plate of the laminated structure for solar radiation shielding, the material of the plastic is appropriately selected in accordance with the purpose for which the laminated structure for solar radiation shielding is used, and is not particularly limited. For example, when the laminated structure for solar radiation shielding is used on transportation equipment such as an automobile, transparent resins such as polycarbonate resins, acrylic resins, and polyethylene terephthalate resins are preferable in terms of securing a see-through property for the driver or occupants of the transportation equipment. That is, it is preferable that the plate-shaped plastics contain one or more resins selected from polycarbonate resins, acrylic resins, and polyethylene terephthalate resins. When the plate-shaped plastics contain one or more resins selected from the resins specified above such as polycarbonate resins, it is possible to enhance the see-through property.

However, the materials of the plastics used for the plate-shaped plastic are not limited to these resins. Other than these above, desirably selected resins such as polyethylene terephthalate (PET) resins, polyamide resins, vinyl chloride resins, olefin resins, epoxy resins, polyimide resins, and fluororesins can be used as the plastics.

Examples of the form of the laminated plates used in the laminated structure according to the present embodiment include a form A and a form B described below.

As an example of the form A, it is possible to give a form in which glass plates or the plate-shaped plastics described above are used as is.

As an example of the form B, it is possible to give a form in which a plate-shaped plastic is made to contain the solar radiation shielding function material particles and used as one that contains the solar radiation shielding function material particles.

Next, the method for making a plate-shaped plastic contain the solar radiation shielding function material particles in the form B will be described.

### (Method for producing plate-shaped plastic containing solar radiation shielding function material particles)

When kneading the solar radiation shielding function material particles into a plastic (resin), the plastic is heated to a temperature (e.g., around from 200°C through 300°C) around the melting point of the plastic, to mix the solar radiation shielding function material particles with the plastic. Then, the mixture of the plastic and the solar radiation shielding function material particles is pelletized, and the obtained pellets can be molded into a desired shape such as film and sheet by a desired method. The method for molding the pellets is not particularly limited, and examples of the method include an extrusion molding method, an inflation molding method, a solution casting method, and a casting method. Here, the thickness of the plate-shaped plastic having, for example, a film shape, a sheet shape, or a board shape may be appropriately selected in accordance with the purpose for which the laminated structure is used. The amount of the solar radiation shielding function material particles to be added to the plastic may be desirably selected in accordance with, for example, the thickness of the plate-shaped plastic, and needed optical properties and mechanical properties. Typically, the amount of the solar radiation shielding function material particles to be added to the plastic is preferably 50% by weight or less relative to the plastic.

### (2) Intermediate layer

Next, the intermediate layer included in the laminated structure according to the present embodiment will be described.

The intermediate layer may include, for example, an intermediate film. It is preferable that the intermediate film is a film that is taken care of in terms of an optical property of transmitting light of the visible light range, and a mechanical property that ensures penetration resistance. The intermediate film may contain a resin material, and it is preferable to use a synthetic resin as the resin material.

The intermediate layer may also contain the solar radiation shielding function material particles as described above.

The following seven forms are given as examples of the form of the intermediate layer.

A form 1, in which the intermediate layer is constituted by the intermediate film containing the solar radiation shielding function material particles.

A form 2, in which the intermediate layer is formed of two or more intermediate films, and at least one intermediate film of the two or more intermediate films contains the solar radiation shielding function material particles.

A form 3, in which the intermediate layer includes a solar radiation shielding layer containing the solar radiation shielding function material particles and provided on the internal surface of at least one of the laminated plates, and an intermediate film laminated on the solar radiation shielding layer.

A form 4 including any of the following forms: a form (i), in which the intermediate layer includes a laminate of two or more intermediate films including a resin film having ductility and a solar radiation shielding layer containing the solar radiation shielding function material particles and provided on one surface of the resin film having ductility; and a form (ii), in which the intermediate layer includes a laminate of two or more intermediate films including a resin film having ductility, and the resin film having ductility is a solar radiation shielding layer internally containing the solar radiation shielding function material particles.

A form 5, in which the intermediate layer includes an intermediate film, and a solar radiation shielding layer containing the solar radiation shielding function material particles and provided on one surface of the intermediate film.

A form 6, in which the intermediate layer includes a laminate including an adhesive layer, a solar radiation shielding layer containing the solar radiation shielding function material particles, and a release layer, and further includes one, or two or more intermediate films on the release layer side of the laminate. In this form, the intermediate layer is bonded to the internal surface of one of the laminated plates via the adhesive layer.

A form 7, in which the intermediate layer is free of the solar radiation shielding function material particles.

The form 1 to the form 6 can be defined as forms in which the intermediate layer includes at least one intermediate film containing a synthetic resin, and the intermediate layer includes, as the intermediate film, at least one solar radiation shielding intermediate film containing the synthetic resin and the solar radiation shielding function material particles provided in the synthetic resin.

Among these forms, the form (i) of the form 4 and the form 5 can be defined as forms in which the intermediate layer includes at least one intermediate film containing a synthetic resin, and the intermediate layer includes, as the intermediate film, a supporting intermediate film containing the synthetic resin, and a solar radiation shielding intermediate film formed on at least one surface of the supporting intermediate film and containing the synthetic resin and the solar radiation shielding function material particles provided in the synthetic resin. Particularly, in the form (i) of the form 4, the supporting intermediate film is a resin film having ductility.

The form (ii) of the form 4 can be defined as a form in which the intermediate layer includes at least one intermediate film containing a synthetic resin, and the intermediate layer includes, as the intermediate film, a solar radiation shielding intermediate film, which is a resin film having ductility, and which contains the solar radiation shielding function material particles in the resin film.

### (Intermediate film)

The configuration of the intermediate film that can be included in the intermediate layer will be described.

It is preferable that the intermediate film contains a synthetic resin in terms of an optical property of transmitting the visible light range, a mechanical property that ensures penetration resistance, and material costs, and it is more preferable that the synthetic resin be a vinyl-based resin or an ionomer resin. When the intermediate layer includes a plurality of intermediate films, the intermediate films may contain the same synthetic resin or different synthetic resins.

The vinyl-based resin is not particularly limited, and examples of the vinyl-based resin include polyvinyl acetal represented by polyvinyl butyral, polyvinyl chloride, vinyl chloride-ethylene copolymers, vinylchloride-ethylene-glycidyl methacrylate copolymers, vinyl chloride-ethylene-glycidyl acrylate copolymers, vinyl chloride-glycidyl methacrylate copolymers, vinyl chloride-glycidyl acrylate copolymers, polyvinylidene chloride, vinylidene chloride-acrylonitrile copolymers, ethylene polyvinyl acetate-vinyl acetate copolymers, ethylene-vinyl acetate copolymers, and polyvinyl acetal-polyvinyl butyral mixtures. When the intermediate film contains a vinyl-based resin as the synthetic resin, polyvinyl acetal represented by polyvinyl butyral, and ethylene-vinyl acetate copolymers are particularly preferable as the synthetic resin in terms of, for example, adhesiveness with the glass and plastic used in the laminated plates, and transparency.

The ionomer resin is not particularly limited. Various publicly-known ionomer resins may be used, and resins may be desirably selected in accordance with, for example, the purpose for which the laminated structure is used. For example, ethylene-based ionomers, styrene-based ionomers, ionomer elastomers, perfluorocarbon ionomers, and urethane ionomers are known as the ionomer resins. A desirable ionomer may be selected and used in accordance with the purpose of use as described above, and the required performance. One type of an ionomer resin may be used in the intermediate film of the laminated structure, but two or more types of ionomer resins may be used in combination.

The laminated structure according to the present embodiment can be suitably used as, for example, window materials for automobiles and buildings, and films for plastic greenhouses. Hence, it is preferable that the ionomer resin contained in the intermediate film of the laminated structure be excellent in transparency, has both a high visible light transmittance and a low haze value at the same time, and be excellent in penetration resistance and weather resistance. When directly providing the intermediate film on the laminated plates, it is preferable that the ionomer resin be excellent in close adhesiveness with the laminated plates.

Considering the respects described above, it is more preferable that the ionomer resin contains an ethylene-based ionomer, and, particularly, it is yet more preferable that the ionomer resin be an ethylene-based ionomer.

The metal ion contained in the ionomer resin is not particularly limited. For example, an ionomer resin containing ions of one or more metals selected from zinc, magnesium, lithium, potassium, and sodium can be used. Particularly, an ionomer resin containing a zinc ion can be suitably used.

Specific examples of the ionomer resin include metal element ionomers of ethylene-acrylic acid-acrylic acid ester copolymers, metal element ionomers of ethylene-acrylic acid-methacrylic acid ester copolymers, metal element ionomers of ethylene-methacrylic acid-acrylic acid ester copolymers, and metal element ionomers of ethylene-methacrylic acid-methacrylic acid ester copolymers. Metal ions contained in any of these ionomer resins are not particularly limited. For example, ions of one or more metals selected from zinc, magnesium, lithium, potassium, and sodium may be contained.

More specifically, SURLYN (registered trademark) series available from DuPont de Nemours, Inc., HI-MILAN (registered trademark) series available from DuPont Mitsui Polychemicals Co., Ltd., and IOTEK (registered trademark) series available from Exxon Mobil Chemical Company can be suitably used.

The binder component of the intermediate film is not limited to synthetic resins, and inorganic binders such as silicates may also be used as the binder component.

As the method for forming the intermediate film, a publicly known method may be used. For example, a calender roll method, an extrusion method, a casting method, and an inflation method may be used.

When the intermediate film contains the solar radiation shielding function material particles and a vinyl-based resin, the intermediate film can be produced by the following procedure. For example, an adding liquid in which the solar radiation shielding function material particles are dispersed in a plasticizer is added to and kneaded with a vinyl-based resin, to prepare a vinyl-based resin composition in which the particles are dispersed uniformly. Next, the prepared vinyl-based resin composition is molded into a sheet shape. In this way, the intermediate film can be produced. When molding the vinyl-based resin composition into a sheet shape, for example, a thermal stabilizer, an antioxidant, and an ultraviolet shielding agent may optionally be blended in the vinyl-based resin composition as needed, and an adhesive force modifier such as a metal salt for control of sheet penetration may optionally be blended in the vinyl-based resin composition.

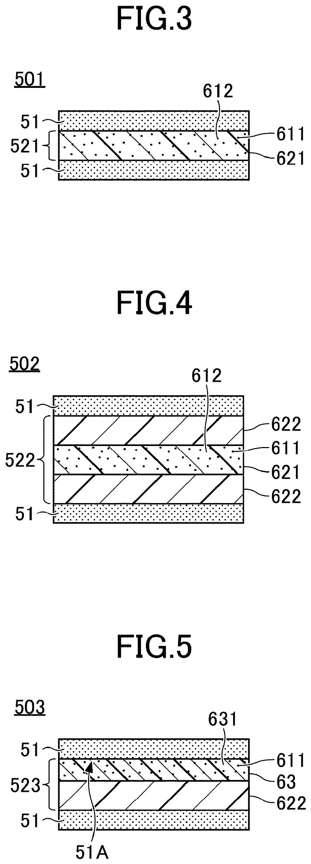

As the configuration of the laminated structure, example forms in which each of the form A and the form B of the laminated plates and each of the form 1 to the form 7 of the intermediate layer described above are combined will be described below with reference to FIG. 3 to FIG. 10, by taking, for example, a case where a vinyl-based resin is mainly used as the intermediate film. FIG. 3 to FIG. 10 are exemplary cross-sectional views of the laminated structure for solar radiation shielding.

In the following description, denotation of a configuration as a form A-1 means that it is a configuration in which the form A and the form 1 are combined.

### (Form A-1)

FIG. 3 illustrates a cross-sectional view of an example of the laminated structure for solar radiation shielding according to a form A-1. As illustrated in FIG. 3, a laminated structure 501 for solar radiation shielding according to the form A-1 includes an intermediate layer 521 sandwiched between two laminated plates 51. The intermediate layer 521 is constituted by an intermediate film 621 containing solar radiation shielding function material particles 611 and a synthetic resin 612, i.e., constituted by a solar radiation shielding intermediate film. It is preferable that the solar radiation shielding function material particles 611 be contained while being dispersed in the synthetic resin 612.

A laminated structure for solar radiation shielding as illustrated in FIG. 3 in which glass plates, or plate-shaped plastics free of the solar radiation shielding function material particles are used as the laminated plates, and the intermediate layer 521 is constituted by an intermediate film containing a synthetic resin and the solar radiation shielding function material particles is produced as follows, for example.

An adding liquid in which the solar radiation shielding function material particles are dispersed in a plasticizer is added to a vinyl-based resin, to prepare a vinyl-based resin composition. The vinyl-based resin composition is molded into a sheet shape, to obtain a sheet of a solar radiation shielding intermediate film. Next, the sheet of the solar radiation shielding intermediate film is sandwiched and pasted between two laminated plates selected from glass plates and plate-shaped plastics, to obtain a laminated structure for solar radiation shielding.

In the above description, an example in which an addition liquid, which is a dispersion liquid in a plasticizer, obtained by dispersing the solar radiation shielding function material particles in the plasticizer, is used has been described as an example. However, this configuration is non-limiting. For example, a vinyl-based resin composition may optionally be prepared by a method of adding a dispersion liquid obtained by dispersing the solar radiation shielding function material particles in a dispersion medium other than a plasticizer to a vinyl-based resin, and separately adding a plasticizer.

By the procedure described above, it is possible to produce a laminated structure for solar radiation shielding, which has a high solar radiation shielding property, i.e., a high near infrared absorbability while also being excellent in visible light transmissivity, and has a low haze value. Moreover, according to the production method described here, it is possible to produce a laminated structure for solar radiation shielding, which can be easily produced and which can be produced at low costs. Moreover, because the solar radiation shielding function material particles described above are used, the laminated structure for solar radiation shielding can be excellent in weather resistance.

### (Form B-1)

Next, a laminated structure having a form in which the form B and the form 1 are combined will be described.

In the laminated structure according to a form B-1, a plate-shaped plastic containing the solar radiation shielding function material particles is used as at least one of the laminated plates, and an intermediate layer is constituted by an intermediate film containing the solar radiation shielding function material particles and a synthetic resin. It is preferable that the solar radiation shielding function material particles be contained while being dispersed in the synthetic resin.

Hence, this form has the same configuration as that of the laminated structure according to the form A-1 except that at least one of the two glass plates or plate-shaped plastic that are free of the solar radiation shielding function material particles is replaced with a plate-shaped plastic containing the solar radiation shielding function material particles, and can be produced in the same manner.

Like the laminated structure according to the form A-1, the laminated structure according to the form B-1 can be a laminated structure for solar radiation shielding, which has a high solar radiation shielding property, i.e., a high near infrared absorbability while also being excellent in visible light transmissivity, and has a low haze value. Moreover, according to the production method described here, it is possible to produce a laminated structure for solar radiation shielding, which can be easily produced and which can be produced at low costs. Moreover, because the solar radiation shielding function material particles described above are used, the laminated structure for solar radiation shielding can be excellent in weather resistance.

### (Form A-2)

Next, a laminated structure according to a form A-2 in which the form A and the form 2 are combined will be described.

FIG. 4 illustrates a cross-sectional view of an example of a laminated structure 502 for solar radiation shielding according to the form A-2. As illustrated in FIG. 4, the laminated structure 502 for solar radiation shielding includes an intermediate layer 522 sandwiched between two laminated plates 51. The intermediate layer 522 includes an intermediate film 621 (first intermediate film) containing solar radiation shielding function material particles 611 and a synthetic resin 612, and intermediate films 622 (second intermediate films) free of the solar radiation shielding function material particles 611. The intermediate film 621 contains the solar radiation shielding function material particles, and serves as a solar radiation shielding intermediate film.

In the intermediate layer 522, the intermediate film 621 is sandwiched between the intermediate films 622.

In the laminated structure 502 for solar radiation shielding illustrated in FIG. 4, glass plates, or plate-shaped plastics free of the solar radiation shielding function material particles are used as laminated plates 51. The intermediate layer 522 includes two or more intermediate films, and at least one of the intermediate films is constituted by the intermediate film 621 containing the solar radiation shielding function material particles.

The laminated structure 502 for solar radiation shielding illustrated in FIG. 4 is produced as follows, for example. The adding liquid already described regarding the form A-1, in which the solar radiation shielding function material particles are dispersed in a plasticizer, is added to a vinyl-based resin, to prepare a vinyl-based resin composition. Then, the vinyl-based resin composition is molded into a sheet shape, to obtain a sheet of a solar radiation shielding intermediate film serving as the intermediate film 621. Next, the sheet of the solar radiation shielding intermediate film is laminated on a sheet of another intermediate film free of the solar radiation shielding function material particles, or interposed between sheets of two intermediate films free of the solar radiation shielding function material particles, to form a laminate, which serves as the intermediate layer 522. Next, the laminate serving as the intermediate layer 522 is sandwiched and pasted between two laminated plates selected from glass plates and plate-shaped plastics, to obtain a laminated structure for solar radiation shielding.

Like the case of the form A-1, when producing the intermediate film 621, a vinyl-based resin composition may optionally be prepared by a method of adding a dispersion liquid obtained by dispersing the solar radiation shielding function material particles in a dispersion medium other than a plasticizer to a vinyl-based resin, and separately adding a plasticizer. In this way, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance.

According to the laminated structure according to the form A-2, because adhesiveness can be enhanced between the sheets of the intermediate films free of the solar radiation shielding function material particles and the two laminated plates selected from glass plates and plate-shaped plastics, there is an advantage that the strength of the laminated structure for solar radiation shielding can be enhanced adequately.

The laminated structure according to the form A-2 is not limited to the configuration described above. For example, a polyethylene terephthalate (PET) film, on at least one surface of which, for example, an Al film or an Ag film is formed by, for example, a sputtering method, may be produced, and the PET film may be interposed between the intermediate films, to constitute the intermediate layer. An appropriate additive may be added to the sheets of the intermediate films 622 free of the solar radiation shielding function material particles. Interposition of the film and addition of an additive to the intermediate films as described above can add functions such as UV cutting and color tone adjustment.

### (Form B-2)

Next, a laminated structure according to a form B-2 in which the form B and the form 2 are combined will be described.

In the laminated structure according to the form B-2, a plate-shaped plastic containing the solar radiation shielding function material particles is used as at least one of the laminated plates. An intermediate layer includes two or more intermediate films, and at least one intermediate film of the two or more intermediate films may be constituted by an intermediate film containing the solar radiation shielding function material particles.

The laminated structure for solar radiation shielding according to the form B-2 can be produced in the same manner as the form A-2, except that at least one of the two glass plates or plate-shaped plastics free of the solar radiation shielding function material particles is replaced with a plate-shaped plastic containing the solar radiation shielding function material particles.

Hence, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance.

Also in the laminated structure according to the form B-2, adhesiveness can be enhanced between the sheets of the intermediate films free of the solar radiation shielding function material particles and the two laminated plates selected from glass plates and plate-shaped plastics, as in the form A-2. Therefore, there is an advantage that the strength of the laminated structure for solar radiation shielding can be enhanced adequately.

### (Form A-3)

Next, a laminated structure according to a form A-3 in which the form A and the form 3 are combined will be described.

FIG. 5 illustrates a cross-sectional view of an example of a laminated structure for solar radiation shielding according to a form A-3. As illustrated in FIG. 5, the laminated structure 503 for solar radiation shielding has a structure in which an intermediate layer 523 is sandwiched between two laminated plates 51. The intermediate layer 523 includes an intermediate film 622 free of the solar radiation shielding function material particles, and a solar radiation shielding layer 63 provided on the intermediate film 622 and containing solar radiation shielding function material particles 611 and a synthetic resin 631.

The laminated structure 503 for solar radiation shielding illustrated in FIG. 5 uses glass plates, or plate-shaped plastics free of the solar radiation shielding function material particles as the laminated plates 51. The intermediate layer 523 includes the solar radiation shielding layer 63 provided on an internal surface 51A of at least one of the glass plates or the plate-shaped plastics and containing the synthetic resin 631 and the solar radiation shielding function material particles 611, and the intermediate film 622 laminated on the solar radiation shielding layer 63. The solar radiation shielding layer 63 is also an intermediate film, and is categorized as the solar radiation shielding intermediate film. However, as described below, the solar radiation shielding layer 63 is formed with one of the laminated plates 51 used as a support, and may be an intermediate film having a film thickness smaller than that in the form 1 and the form 2.

The laminated structure 503 for solar radiation shielding illustrated in FIG. 5 is produced as follows, for example. An appropriate binder component is blended in an adding liquid in which the solar radiation shielding function material particles are dispersed in a plasticizer or a dispersion medium, to prepare a coating liquid. Examples of the binder component include inorganic binders such as silicates, and acrylic-based, vinyl-based, and urethane-based organic binders. Using the prepared coating liquid, the solar radiation shielding layer is formed on the surface 51A positioned at the internal side of at least one of the laminated plates 51. Next, a resin composition free of the solar radiation shielding function material particles is molded into a sheet shape, to obtain a sheet of the intermediate film. Then, the obtained sheet of the intermediate film is sandwiched and pasted between the surface 51A positioned at the internal side of at least the one of the laminated plates 51 on which the solar radiation shielding layer is formed and the other laminated plate 51 on which no solar radiation shielding layer is formed. By the operation described above, the laminated structure for solar radiation shielding is obtained. Examples of the method for producing the laminated structure includes the method described above.

According to this method, it is possible to set a small film thickness for the solar radiation shielding layer included in the laminated structure for solar radiation shielding. By having the film thickness that is set small, the solar radiation shielding layer can also exhibit a reflection effect in addition to the absorption effect with respect to infrared rays, and can improve the solar radiation shielding property of the laminated structure for solar radiation shielding. Hence, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance.

Moreover, by adding an appropriate additive to the sheet of the intermediate film free of the solar radiation shielding function material particles, it is possible to add functions such as UV cutting and color tone adjustment.

### (Form B-3)

Next, a laminated structure according to a form B-3 in which the form B and the form 3 are combined will be described below.

In the laminated structure according to the form B-3, a plate-shaped plastic containing the solar radiation shielding function material particles is used as at least one of the laminated plates. An intermediate layer includes a solar radiation shielding layer provided on the internal surface of at least one of the laminated plates and containing the solar radiation shielding function material particles, and an intermediate film laminated on the solar radiation shielding layer.

The laminated structure for solar radiation shielding according to the form B-3 can be produced in the same manner as the form A-3, except that at least one of the two glass plates or plate-shaped plastics free of the solar radiation shielding function material particles is replaced with a plate-shaped plastic containing the solar radiation shielding function material particles.

Also by this method, it is possible to set a small film thickness for the solar radiation shielding layer included in the laminated structure for solar radiation shielding, as in the form A-3. By having the film thickness that is set small, the solar radiation shielding layer can also exhibit a reflection effect in addition to the absorption effect with respect to infrared rays, and can improve the solar radiation shielding property of the laminated structure for solar radiation shielding. Hence, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance.

Moreover, by adding an appropriate additive to the sheet of the intermediate film free of the solar radiation shielding function material particles, it is possible to add functions such as UV cutting and color tone adjustment.

### (Form A-4)

A laminated structure according to a form A-4 in which the form A and the form 4 are combined will be described.

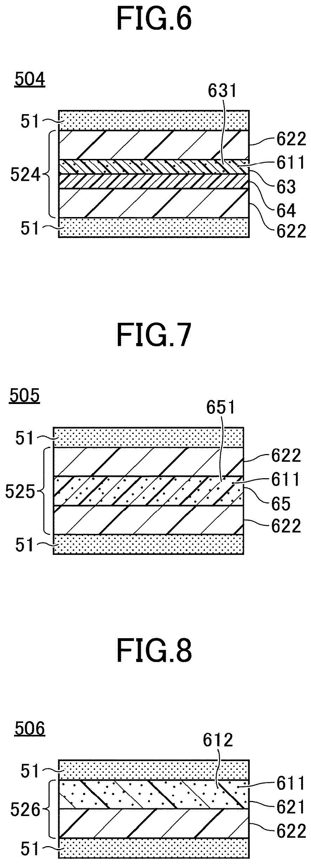

(i) FIG. 6 illustrates a cross-sectional view of an example of a laminated structure 504 for solar radiation shielding according to the form (i) of the form A-4. That is, this form is a form in which an intermediate layer includes a laminate of two or more intermediate films including a resin film having ductility (or a resin film substrate having ductility), and a solar radiation shielding layer provided on one surface of the resin film having ductility and containing the solar radiation shielding function material particles.

As illustrated in FIG. 6, the laminated structure 504 for solar radiation shielding includes an intermediate layer 524 sandwiched between two laminated plates 51. In the intermediate layer 524, a solar radiation shielding layer 63 containing solar radiation shielding function material particles 611 and a synthetic resin 631 is formed on a resin film 64 having ductility. The intermediate layer 524 is constituted such that the laminate (solar radiation shielding film) of the resin film 64 having ductility and the solar radiation shielding layer 63 is sandwiched between intermediate films 622 free of the solar radiation shielding function material particles. The resin film 64 having ductility, and the solar radiation shielding layer 63 are also intermediate films, and are categorized as the supporting intermediate film and the solar radiation shielding intermediate film respectively. As described below, the solar radiation shielding layer 63 is formed with the resin film 64 having ductility used as a support, and may be an intermediate film having a film thickness smaller than that of the form 1 and the form 2.

A resin having ductility, and the degree of ductility of the resin film having ductility are not particularly limited, and may be selected in accordance with, for example, the configuration of the laminated structure, and the degree of ductility needed in the laminated structure.

The laminated structure for solar radiation shielding as illustrated in FIG. 6 in which glass plates, or plate-shaped plastics free of the solar radiation shielding function material particles are used as the laminated plates, and the intermediate layer includes a laminate of two or more intermediate films including a resin film having ductility and a solar radiation shielding layer provided on one surface of the resin film having ductility and containing the solar radiation shielding function material particles is produced as follows, for example.

For example, using a coating liquid prepared by appropriately blending a binder component in a dispersion liquid or an adding liquid in which the solar radiation shielding function material particles are dispersed in a plasticizer or a dispersion medium, a solar radiation shielding layer is formed on one surface of the resin film having ductility. Examples of the binder component include inorganic binders such as silicates, and acrylic-based, vinyl-based, and urethane-based organic binders.

When forming the solar radiation shielding layer on one surface of the resin film having ductility, previous surface treatment may optionally be applied to the surface of the resin film having ductility by, for example, corona treatment, plasma treatment, flame treatment, or primer layer coating treatment, in order to improve bindability with the resin binder.

Then, a vinyl-based resin composition free of the solar radiation shielding function material particles may be molded into a sheet shape, to obtain sheets of the intermediate films. It is preferable to obtain the intermediate layer by providing the resin film, which has ductility and on one surface of which the solar radiation shielding layer is formed, between the sheets of the intermediate films free of the solar radiation shielding function material particles. With this configuration, adhesiveness can be easily adjusted between the resin film, which has ductility and on one surface of which the solar radiation shielding layer is formed, and the laminated plates. Here, needless to say, the solar radiation shielding function material particles, and an appropriate additive that has effects of, for example, UV cutting and color tone adjustment may be contained in one of the two or more laminated intermediate films.

Then, by sandwiching and pasting the obtained intermediate layer 524 between the two laminated plates 51 selected from glass plates and plate-shaped plastics, it is possible to obtain the laminated structure 504 for solar radiation shielding.

(ii) A form in which an intermediate layer includes a laminate of two or more intermediate films including a resin film having ductility, and the resin film having ductility is a solar radiation shielding layer internally containing the solar radiation shielding function material particles will be described.

FIG. 7 illustrates a cross-sectional view of an example of a laminated structure 505 for solar radiation shielding according to the form (ii) of the form A-4. That is, this form is a form in which an intermediate layer includes a laminate of two or more intermediate films including a resin film having ductility, and the resin film having ductility is a solar radiation shielding layer internally containing the solar radiation shielding function material particles.

As illustrated in FIG. 7, the laminated structure 505 for solar radiation shielding includes an intermediate layer 525 sandwiched between two laminated plates 51.

The intermediate layer 525 includes a resin film 65 having ductility (solar radiation shielding film), which contains solar radiation shielding function material particles 611 and a resin 651 having ductility. In FIG. 7, the resin film 65 having ductility is sandwiched between intermediate films 622 free of the solar radiation shielding function material particles. The resin film 65 having ductility is also an intermediate film, and is categorized as the solar radiation shielding intermediate film.

The resin film 65 having ductility can be produced as follows, for example. A resin 651 having ductility is heated at a temperature around the melting point of the resin (around 200°C or higher and 300°C or lower), and mixed with the solar radiation shielding function material particles, to prepare a mixture. Then, the mixture of the resin having ductility and the solar radiation shielding function material particles is pelletized, and, for example, a film or a board is formed by a predetermined method. For example, a film or a board can be formed by, for example, an extrusion molding method, an inflation molding method, a solution casting method, and a casting method. Here, the thickness of the film or the board may be appropriately selected in accordance with the purpose of use. The amount of the solar radiation shielding function material particles 611 to be added to the resin 651 having ductility varies in accordance with the thickness of the base material, and needed optical properties and mechanical properties. However, typically, the amount of the solar radiation shielding function material particles is preferably 50% by weight or less relative to the resin.

Then, a vinyl-based resin composition free of the solar radiation shielding function material particles may be molded into a sheet shape, to obtain sheets of the intermediate films 622. The resin film 65 having ductility and internally containing the solar radiation shielding function material particles may be provided between the sheets of the two intermediate films 622, to obtain the intermediate layer 525.

Then, by sandwiching and pasting the obtained intermediate layer 525 between the two laminated plates 51 selected from glass plates and plate-shaped plastics, it is possible to obtain the laminated structure 505 for solar radiation shielding.

Here, needless to say, the solar radiation shielding function material particles may be contained in at least one of the two or more laminated intermediate films 622. Moreover, as desired, an appropriate additive having effects of, for example, UV cutting and color tone adjustment may be freely and easily added to the intermediate films 622 free of the solar radiation shielding function material particles. This makes it possible to obtain a laminated structure for solar radiation shielding having multiple functions.

Also by the production methods described regarding the forms (i) and (ii), it is possible to set a small film thickness for the solar radiation shielding layer included in the laminated structure for solar radiation shielding. By having the film thickness that is set small, the solar radiation shielding layer can also exhibit a reflection effect in addition to the absorption effect with respect to infrared rays, and can improve the solar radiation shielding property. Hence, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance.

Moreover, by adding an appropriate additive to the sheets of the intermediate films free of the solar radiation shielding function material particles, it is possible to add functions such as UV cutting and color tone adjustment.

### (Form B-4)

Next, a laminated structure according to a form B-4 in which the form B and the form 4 are combined will be described.

In the laminated structure according to the form B-4, a plate-shaped plastic containing the solar radiation shielding function material particles can be used as at least one of the laminated plates.

Then, an intermediate layer may have any of the following configurations. The intermediate layer includes a solar radiation shielding layer formed on one surface of a resin film having ductility and containing the solar radiation shielding function material particles, and two or more laminated intermediate films. Alternatively, the intermediate layer includes a solar radiation shielding layer, which is a ductile film substrate internally containing the solar radiation shielding function material particles, and two or more laminated intermediate films.

The laminated structure for solar radiation shielding according to the form B-4 can be produced in the same manner as the form A-4, except that at least one of the two glass plates or plate-shaped plastics free of the solar radiation shielding function material particles is replaced with a plate-shaped plastic containing the solar radiation shielding function material particles.

Also by this production method, it is possible to set a small film thickness for the solar radiation shielding layer included in the laminated structure for solar radiation shielding, as in the form A-4. By having the film thickness that is set small, the solar radiation shielding layer can also exhibit a reflection effect in addition to the absorption effect with respect to infrared rays, and can improve the solar radiation shielding property. Hence, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance. Moreover, by adding an appropriate additive to the sheets of the intermediate films free of the solar radiation shielding function material particles, it is possible to add functions such as UV cutting and color tone adjustment.

### (Form A-5)

Next, a laminated structure according to a form A-5 in which the form A and the form 5 are combined will be described.

FIG. 8 illustrates a cross-sectional view of an example of a laminated structure for solar radiation shielding according to the form A-5. As illustrated in FIG. 8, a laminated structure 506 for solar radiation shielding according to the form A-5 includes an intermediate layer 526 that is sandwiched between two laminated plates 51. The intermediate layer 526 includes an intermediate film 621 (first intermediate film) containing solar radiation shielding function material particles 611 and a synthetic resin 612, and an intermediate film 622 (second intermediate film) free of the solar radiation shielding function material particles. The intermediate film 621 contains the solar radiation shielding function material particles, and is categorized as the solar radiation shielding intermediate film.

The laminated structure for solar radiation shielding illustrated in FIG. 8 in which glass plates, or plate-shaped plastics free of the solar radiation shielding function material particles are used as the laminated plates, and the intermediate layer includes a solar radiation shielding intermediate film containing the solar radiation shielding function material particles on one surface of an intermediate film is produced as follows, for example.

A binder component is blended in an adding liquid or a dispersion liquid in which the solar radiation shielding function material particles are dispersed in a plasticizer or a dispersion medium, to prepare a coating liquid. As the binder component, for example, inorganic binders such as silicates, or acrylic-based, vinyl-based, or urethane-based organic binders may be used.

Next, the coating liquid is applied on one surface of a sheet of an intermediate film, which is obtained by molding a resin composition free of the solar radiation shielding function material particles into a sheet shape, to form a solar radiation shielding intermediate film (solar radiation shielding layer), to obtain a solar radiation shielding layer-added intermediate film.

Then, by sandwiching and pasting the solar radiation shielding layer-added intermediate film between the two laminated plates selected from glass plates and plate-shaped plastics, it is possible to obtain a laminated structure for solar radiation shielding.

According to the method described above, because the film containing the solar radiation shielding function material particles is formed on the surface of the sheet of the intermediate film, an additive such as a filler can further be added in the solar radiation shielding function material particles as desired, and the solar radiation shielding property can be improved. Hence, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance.

### (Form B-5)

Next, a laminated structure according to a form B-5 in which the form B and the form 5 are combined will be described.

In the laminated structure for solar radiation shielding according to the form B-5, a plate-shaped plastic containing the solar radiation shielding function material particles can be used as at least one of the laminated plates. As an intermediate layer, a product in which a solar radiation shielding layer containing the solar radiation shielding function material particles is formed on one surface of an intermediate film can be used.

The laminated structure for solar radiation shielding according to the form B-5 can be produced in the same manner as the form A-5, except that at least one of the two glass plates or plate-shaped plastics free of the solar radiation shielding function material particles is replaced with a plate-shaped plastic containing the solar radiation shielding function material particles.

Also by the method described above, because the film containing the solar radiation shielding function material particles is formed on the surface of the sheet of the intermediate film, an additive such as a filler can further be added in the solar radiation shielding function material particles as desired, and the solar radiation shielding property can be improved. Hence, a laminated structure for solar radiation shielding, which has a high solar radiation shielding property, i.e., a high near infrared absorbability while also being excellent in visible light transmissivity, and has a low haze value, can be produced at low production costs. Moreover, because the solar radiation shielding function material particles described above are used, the laminated structure for solar radiation shielding can be excellent in weather resistance.

### (Form A-6)

Next, a laminated structure according to a form A-6 in which the form A and the form 6 are combined will be described.

As the laminated plates, glass plates, or plate shaped plastics free of the solar radiation shielding function material particles are used. A laminate, which constitutes part of an intermediate layer, and in which an adhesive layer, a solar radiation shielding layer containing the solar radiation shielding function material particles, and a release layer are laminated in this order, is bonded, by the adhesive layer, to the internal surface of one of the two laminated plates. The intermediate layer further includes an intermediate film, or two or more laminated intermediate films, which is or are overlaid on the laminate on the release layer side of the laminate.

That is, the laminated structure according to the form A-6 has a structure in which one laminated plate, an adhesive layer, a solar radiation shielding layer containing the solar radiation shielding function material particles, a release layer, an intermediate film or two or more laminated intermediate films, and the other laminated plate are laminated in this order. The adhesive layer, the solar radiation shielding layer, and the release layer are also intermediate films.

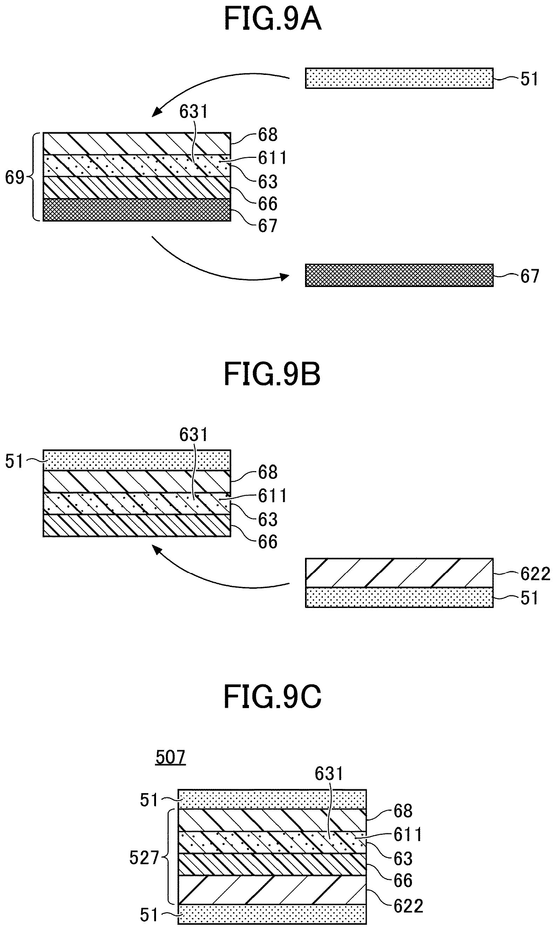

The laminated structure according to the form A-6 can be produced as follows, for example. This production process will be described with reference to FIG. 9A to FIG. 9C. FIG. 9A to FIG. 9C illustrate cross-sectional views of an example of the laminated structure according to the form A-6 during the production process.

First, as illustrated in FIG. 9A, a release layer 66 is formed on one surface of a film sheet 67, and a solar radiation shielding layer 63 containing solar radiation shielding function material particles 611 and a synthetic resin 631 is formed on the release layer 66. An adhesive layer 68 is formed on the solar radiation shielding layer 63, to form a laminate and obtain a transfer film 69.

Examples of the film sheet 67 include: synthetic resin films of, for example, polyester, polypropylene, polyethylene, polyethylene terephthalate, polycarbonate, polyimide, and fluorine; paper; and cellophane.

Examples of the material of the release layer 66 include waxes, acrylic-based resins, and polyvinyl acetal represented by polyvinyl butyral.

Examples of the material of the adhesive layer 68 include polyvinyl acetal represented by polyvinyl butyral, polyvinyl chloride, vinyl chloride-ethylene copolymers, vinyl chloride-ethylene-glycidyl methacrylate copolymers, vinyl chloride-ethylene-glycidyl acrylate copolymers, polyvinylidene chloride, vinylidene chloride-acrylonitrile copolymers, polyamide, polymethacrylic acid ester, and acrylic acid ester copolymers.

The adhesive layer 68 of the transfer film 69 is bonded to the internal surface of one of the laminated plates 51 under pressurization, and the film sheet 67 is then peeled from the transfer film 69. Hence, under the effect of the release layer 66, only the film sheet 67 is peeled from the transfer film 69.

The product having the state obtained by peeling the film sheet 67 is a solar radiation shielding film, and is illustrated in FIG. 9B. After the film sheet 67 is peeled, the remaining product is bonded to the internal surface of the other laminated plate 51 formed of glass plate or plate-shaped plastic under pressurization via the intermediate film 622 or two or more laminated intermediate films described above. In this way, a laminated structure 507 for solar radiation shielding illustrated in FIG. 9C is obtained.

The obtained example of the laminated structure 507 for solar radiation shielding according to the form A-6 includes the intermediate layer 527 sandwiched between the two laminated plates 51 as illustrated in FIG. 9C. The intermediate layer 527 is formed of the intermediate film 622 free of the solar radiation shielding function material particles, the release layer 66, the solar radiation shielding layer 63 containing the solar radiation shielding function material particles 611, and the adhesive layer 68.

By the method described above, it is possible to produce a laminated structure for solar radiation shielding, which has a high solar radiation shielding property, i.e., a high near infrared absorbability while also being excellent in visible light transmissivity, and has a low haze value. Moreover, by the method described above, it is possible to produce a laminated structure for solar radiation shielding, which can be easily produced and which can be produced at low costs. Moreover, because the solar radiation shielding function material particles described above are used, the laminated structure for solar radiation shielding can be excellent in weather resistance. Moreover, by the method described above, it is possible to produce a solar radiation shielding layer having a small film thickness easily. Furthermore, by adding an appropriate additive to the intermediate film, the release layer, and the adhesive layer, it is possible to add functions such as UV cutting and color tone adjustment.

### (Form B-6)

Next, a laminated structure according to a form B-6 in which the form B and the form 6 are combined will be described.

In the laminated structure for solar radiation shielding according to the form B-6, a plate-shaped plastic containing the solar radiation shielding function material particles can be used as at least one of the laminated plates.

A laminate, which constitutes part of an intermediate layer, and in which an adhesive layer, a solar radiation shielding layer containing the solar radiation shielding function material particles, and a release layer are laminated in this order, is bonded, by the adhesive layer, to the internal surface of one of the two laminated plates. The intermediate layer further includes an intermediate film, or two or more laminated intermediate films, which is or are overlaid on the laminate on the release layer side of the laminate.

That is, the laminated structure according to the form B-6 has a structure in which one laminated plate, an adhesive layer, a solar radiation shielding layer containing the solar radiation shielding function material particles, a release layer, an intermediate film or two or more laminated intermediate films, and the other laminated plate are laminated in this order.

The laminated structure for solar radiation shielding according to the form B-6 can be produced in the same manner as the form A-6, except that at least one of the two glass plates or plate-shaped plastics free of the solar radiation shielding function material particles is replaced with a plate-shaped plastic containing the solar radiation shielding function material particles.

By the method described above, it is possible to produce a laminated structure for solar radiation shielding, which has a high solar radiation shielding property, i.e., a high near infrared absorbability while also being excellent in visible light transmissivity, and has a low haze value. Moreover, by the method described above, it is possible to produce a laminated structure for solar radiation shielding, which can be easily produced and which can be produced at low costs. Moreover, because the solar radiation shielding function material particles described above are used, the laminated structure for solar radiation shielding can be excellent in weather resistance. Moreover, also by the method described above, it is possible to produce a solar radiation shielding layer having a small film thickness easily. Furthermore, by adding an appropriate additive to the release layer and the adhesive layer, it is possible to add functions such as UV cutting and color tone adjustment.

### (Form B-7)

Next, a laminated structure according to a form B-7 in which the form B and the form 7 are combined will be described.

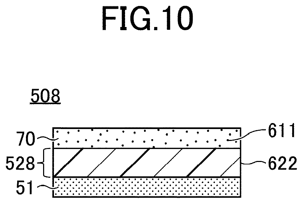

FIG. 10 illustrates a cross-sectional view of an example of the laminated structure for solar radiation shielding according to the form B-7. As illustrated in FIG. 10, the laminated structure 508 for solar radiation shielding according to the form B-7 includes an intermediate layer 528 that is sandwiched between a laminated plate 70 containing solar radiation shielding function material particles 611 and a laminated plate 51 free of the particles. The intermediate layer 528 is constituted by an intermediate film 622 free of the solar radiation shielding function material particles.

The laminated structure for solar radiation shielding, in which a plate-shaped plastic containing the solar radiation shielding function material particles is used as at least one of the laminated plates, and the intermediate layer is constituted by an intermediate film free of the solar radiation shielding function material particles and containing, for example, a vinyl-based resin, is produced as follows, for example.

A plasticizer is added to a vinyl-based resin, to prepare a vinyl-based resin composition. The vinyl-based resin composition is molded into a sheet shape, to obtain a sheet of the intermediate film. A plate-shaped plastic containing the solar radiation shielding function material particles is used as at least one of the laminated plates between which the sheet of the intermediate film is to be sandwiched, and a glass plate or a plate-shaped plastic may be used as the other laminated plate.

By the method described above, it is possible to produce a laminated structure for solar radiation shielding, which has a high solar radiation shielding property, i.e., a high near infrared absorbability while also being excellent in visible light transmissivity, and has a low haze value. Moreover, by the method described above, it is possible to produce a laminated structure for solar radiation shielding, which can be easily produced and which can be produced at low costs. Moreover, because the solar radiation shielding function material particles described above are used, the laminated structure for solar radiation shielding can be excellent in weather resistance. Moreover, by adding an appropriate additive to one or more members selected from the intermediate film and the other laminated plate, it is possible to add functions such as UV cutting and color tone adjustment.

### 4. Method for producing dispersion liquid, adding liquid, and coating liquid of solar radiation shielding function material particles

A method for producing a dispersion liquid, an adding liquid, and a coating liquid of the solar radiation shielding function material particles, which can be used when forming, for example, the intermediate film described above, will be described.

The method for producing a dispersion liquid and an adding liquid of the solar radiation shielding function material particles is not particularly limited, and a desirably selected method may be used so long as the method can disperse the solar radiation shielding function material particles in a plasticizer or a dispersion medium uniformly. Examples of the method include a pulverization/dispersion treatment method using, for example, a bead mill, a ball mill, a sand mill, a paint shaker, and an ultrasonic homogenizer. By dispersing the solar radiation shielding function material particles in a plasticizer or a dispersion medium, it is possible to prepare a dispersion liquid and an adding liquid that can be applied to production of the laminated structure for solar radiation shielding according to the present embodiment.

The dispersion medium in which the solar radiation shielding function material particles are dispersed is not particularly limited, and may be appropriately selected in accordance with, for example, the conditions under which, for example, the solar radiation shielding layer is formed, and the resin to be blended when preparing a vinyl-based resin composition or an ionomer resin composition. For example, one or more organic solvents selected from, for example, water; alcohols such as ethanol, propanol, butanol, isopropyl alcohol, isobutyl alcohol, and diacetone alcohol; ethers such as methyl ether, ethyl ether, propyl ether, and dipropylene glycol monomethyl ether; esters; ketones such as acetone, methyl ethyl ketone, diethyl ketone, cyclohexanone, and isobutyl ketone; and glycol compounds such as dipropylene glycol monomethyl ether may be used as the dispersion medium. Moreover, as needed, an acid or an alkali may be added to adjust pH. Moreover, needless to say, for example, various surfactants or coupling agents may also be added in order to further improve dispersion stability of the particles in the coating liquid.

By using the dispersion medium described above, it is possible to prepare, for example, a solar radiation shielding function material particle dispersion liquid.

The adding liquid is a liquid obtained by dispersing the solar radiation shielding function material particles in a plasticizer instead of the dispersion medium described above. The plasticizer, which adjusts the plasticity of the vinyl-based resin described above, is not particularly limited. For example, one or more selected from, for example, dioctyl phthalate, dibutyl phthalate, diisobutyl phthalate, adipic acid-di-2-ethyl hexyl, diisodecyl adipate, epoxy fatty acid monoester, triethylene glycol-di-2-ethyl butyrate, triethylene glycol-di-2-ethyl hexoate, dibutyl sebacate, and dibutyl sebacate may be used.

When a plasticizer is used as a dispersion medium, dispersion of the solar radiation shielding function material particles may be inhibited because the viscosity of the plasticizer is high. In such a case, by purging the dispersion medium in the dispersion liquid by the plasticizer, it is possible to produce an adding liquid in which the plasticizer is the dispersion medium.

The coating liquid is prepared by appropriately blending a binder component to the dispersion liquid or the adding liquid described above. For example, the dispersion medium of the coating liquid may be selected in accordance with the binder component.

As the binder component, for example, an inorganic binder or an organic binder may be used, and may be desirably selected.

When using an inorganic binder as the binder component, examples of the inorganic binder include metal alkoxides of silicon, zirconium, titanium, and aluminum or partially hydrolytic condensation polymerization products of the metal alkoxides, and organosilazane.

When using an organic binder as the binder component, styrene-based resins, acrylic-based resins, UV-curable resins, vinyl-based resins, urethane-based resins, and epoxy-based resins may be used as the organic binder. Monomers or oligomers of these resins may be blended, or these resins may be used while being dissolved in the solvent of the coating liquid. When adding a monomer or an oligomer of an organic binder in the coating liquid, any agent such as a curing agent needed for curing of, for example, the monomer may be optionally added or contained in the coating liquid during coating.

When using a metal alkoxide of silicon, zirconium, titanium, or aluminum, or a hydrolytic polymerization product of the metal alkoxide as the inorganic binder, it is preferable to set the substrate heating temperature after coating of the coating liquid to, for example, 100°C or higher. By setting the substrate heating temperature to 100°C or higher, it is possible to make the polymerization reaction of the alkoxide or its hydrolytic polymerization product contained in the coating film substantially complete. By making the polymerization reaction substantially complete, it is possible to inhibit water or the organic solvent from remaining in the film, and to enhance the visible light transmittance through the film after being heated. Therefore, the heating temperature is preferably 100°C or higher, and more preferably higher than or equal to the boiling point of, for example, the dispersion medium or the plasticizer in the coating liquid.

A dispersed particle diameter is an index for evaluating the dispersion condition of the solar radiation shielding function material particles in the dispersion liquid, the adding liquid, and the coating liquid. The dispersed particle diameter represents the diameter of aggregated particles formed through aggregation of the solar radiation shielding function material particles dispersed in the solvent, and can be measured using various commercially available particle size analyzers. For example, it is possible to obtain the dispersed particle diameter by measurement using ELS-8000 available from Otsuka Electronics Co., Ltd., which employs dynamic light scattering as the principle.

When forming a coating film by applying the dispersion liquid, the adding liquid, or the coating liquid on an appropriate transparent base material, the applying method is not particularly limited. The applying method may be any method that can apply the dispersion liquid or the coating liquid flatly, thinly, and uniformly, such as a spin coating method, a bar coating method, a spray coating method, a dip coating method, a screen printing method, a roll coating method, and flow coating.

It is possible to confirm the dispersion condition of the solar radiation shielding function material particles according to the present embodiment in the dispersion liquid, the adding liquid, and the coating liquid, by measuring the dispersion condition of the solar radiation shielding function material particles when the solar radiation shielding function material particles are dispersed in the dispersion medium. For example, it is possible to confirm the dispersion condition by sampling a sample from the liquid in which the solar radiation shielding function material particles according to the present embodiment are present in the dispersion medium in the form of particles and particle aggregates, and measuring the dispersion condition using various commercially available particle size analyzers. As the particle size analyzer, for example, a publicly known measuring instrument such as ELS-8000 available from Otsuka Electronics Co., Ltd., which employs dynamic light scattering as the principle, may be used.

The dispersed particle diameter of the solar radiation shielding function material particles is preferably 800 nm or less, more preferably 200 nm or less, and yet more preferably 100 nm or less in terms of optical properties.

The lower limit of the dispersed particle diameter of the solar radiation shielding function material particles is not particularly limited, but is preferably 10 nm or greater.

It is preferable that the solar radiation shielding function material particles be dispersed uniformly in, for example, the dispersion medium or the plasticizer.

The preferable dispersed particle diameter of the solar radiation shielding function material particles is 800 nm or less, because in this case, for example, a near infrared absorbing film (near infrared shielding film) or a molding (e.g., a plate or a sheet) that is produced using the solar radiation shielding function material particle dispersion liquid can avoid being a gray system having a monotonically decreasing transmittance.

The dispersed particle diameter represents the particle diameter of the individual particles of the solar radiation shielding function material particles dispersed in the solar radiation shielding function material particle dispersion liquid, or the particle diameter of an aggregate particle, which is an aggregate of the solar radiation shielding function material particles.

### EXAMPLES

The present invention will be described more specifically below by way of Examples. The present invention should not be construed as being limited to these Examples.

### [Example 1]

Cs₂CO₃ (23.5 g) was dissolved in water (36 g), and the resulting product was added to H₂WO₄ (109 g). The resulting product was sufficiently stirred, and dried, to obtain a raw material mixture of Example 1 (raw material preparing step).

Next, while using the raw material mixture prepared in the raw material preparing step, the hybrid plasma reactor 10 illustrated in FIG. 1 in which a direct-current plasma and a high-frequency plasma were superimposed was used, to perform the reaction step.

First, the interior of the reaction system was vacuum-pumped by the vacuum pumping device 13 to approximately 0.1 Pa (approximately 0.001 torr), and then purged completely with an argon gas, to produce a 1-atm argon gas circulating system.

An argon gas of 8 L/min was flowed through the plasma generation gas feeding port 15, to generate a direct-current plasma. Here, the direct-current power supply input was 6 kW.

Moreover, as the gases for high-frequency plasma generation and quartz tube protection, an argon gas of 40 L/min and a hydrogen gas of 3 L/min were flowed spirally through the sheath gas introducing port 16 along the internal wall of the water-cooling quartz double tube 11, to generate a high-frequency plasma.

Here, the high-frequency power supply input was set to 45 kW. After the hybrid plasma was generated, with a mixture gas of an argon gas of 3 L/min and an oxygen gas of 0.01 L/min used as a carrier gas, the raw material mixture of Example 1 was fed into the plasma at a feeding rate of 2 g/min from the raw material powder feeding device 19.

As a result, the raw material evaporated momentarily and condensed at the plasma flame tail, to become minute particles. At the bottom of the reaction chamber 12, particles (cesium tungsten oxide particles a), which were the solar radiation shielding function material particles, were recovered.

The particle diameter of the recovered cesium tungsten oxide particles a was measured by TEM observation. As a result, it was successfully confirmed that the particle diameters of evaluated thirty particles were 10 nm or greater and 50 nm or less. The particle diameters were calculated, seeing the diameters of the minimum circumscribed circles of the evaluated particles as the particle diameters of the particles.

Quantitative analyses of Cs, W, and O from the recovered cesium tungsten oxide particles a found them to be 14.7wt%, 65.5wt%, 18.3wt%, respectively, and it was successfully confirmed that a chemical formula calculated from the quantitative analyses was Csw_{0.31}WO_{3.21}. The results of the analyses are presented in the "Composition" field of Table 1.

The element M, i.e., Cs was evaluated using a flame atomic absorption spectrometer (obtained from Varian Medical Systems, Inc., Model No. SpectrAA 220FS). W was evaluated using an ICP emission spectroscopic analyzer (obtained from Shimadzu Corporation, Model No. ICPE9000). O was evaluated using an oxygen/nitrogen simultaneous analyzer (obtained from LECO Corporation, Model No. ON836). The same applies to other Examples and Comparative Examples below.

An X-ray diffraction pattern of the cesium tungsten oxide particles a was measured using a powder X-ray diffractometer (obtained from Malvern Panalytical Ltd. of Spectris Co., Ltd., X'Pert-PRO/MPD) by powder X-ray diffractometry (Θ-2Θ method). Determination of a crystal structure of the compound contained in the cesium tungsten oxide particles a based on the obtained X-ray diffraction pattern confirmed the same peak as that of hexagonal Cs_{0.3}WO₃. As described, the crystal structure of an obtained complex tungsten oxide can be determined based on an X-ray diffraction pattern. In the present Example, the crystal structure of the compound contained in the particles of the complex tungsten oxide had the same peak as that of a similar hexagonal complex tungsten oxide. Hence, it was successfully confirmed that the crystal structure of the complex tungsten oxide obtained in the present Example, i.e., cesium tungsten oxide, was a hexagonal crystal.

The cesium tungsten oxide particles a weighed out to 5% by weight, a polymeric dispersant weighed out to 5% by weight, and dipropylene glycol monomethyl ether weighed out to 90% by weight were pulverized using a paint shaker filled with ZrO₂ beads having a diameter of 0.3 mm for 1 hour, to prepare a solar radiation shielding function material particle dispersion liquid. The crystallite size of the particles after the solvent was removed from the solar radiation shielding function material particle dispersion liquid was 25 nm. The lattice constant of a-axis of the particles was 7.4099 angstroms, and the lattice constant of c-axis of the particles was 7.6090 angstroms. The crystallite size and the lattice constants were calculated by the Rietveld method. These evaluation results are presented in Table 2.

Next, polyvinyl butyral was added to the obtained dispersion liquid (liquid A), to which triethylene glycol-di-2-ethyl butyrate was then added as a plasticizer, to prepare an intermediate film composition in which the concentration of the cesium tungsten oxide particles a was 0.036% by mass, and the concentration of polyvinyl butyral was 71.1% by mass. The prepared composition was kneaded using a roll, and molded into a sheet shape having a thickness of 0.76 mm, to produce an intermediate film. The produced intermediate film was sandwiched between two green glass substrates having a size of 100 mm × 100 mm × approximately 2 mm (thickness), provisionally bonded by being heated to 80°C, and then formally bonded in an autoclave at 140°C at 4 kg/cm², to produce a laminated structure A.

The laminated structure A for solar radiation shielding of Example 1 was evaluated by the evaluation method described below.

### <Evaluation of heat resistance>

The obtained laminated structure A was subjected to a heat resistance test in which it would be retained in an open air atmosphere at 120°C for 125 hours, to evaluate Δ values of the visible light transmittance and the solar radiation transmittance through the solar radiation shielding structure.

The visible light transmittance and the solar radiation transmittance were measured using a spectrophotometer U-4000 obtained from Hitachi Ltd., and calculated in accordance with Japan Industrial Standards (JIS) R 3106 (2019). The solar radiation transmittance is an indicator of the hot ray shielding performance.

The visible light transmittance and the solar radiation transmittance were evaluated before and after the heat resistance test. The Δ value of the visible light transmittance was calculated according to (visible light transmittance after heat resistance test) - (visible light transmittance before heat resistance test). The Δ value is presented in Table 1 as Δ Visible light transmittance. The Δ value of the solar radiation transmittance was calculated according to (solar radiation transmittance after heat resistance test) - (solar radiation transmittance before heat resistance test). The Δ value is presented in Table 1 as Δ Solar radiation transmittance.

Each Δ value suggests an excellent heat resistance when it is 1.0% or less. A Δ value greater than 1.0% indicates a poor heat resistance. The result of this evaluation is presented in Table 1.

The visible light transmittance and the solar radiation transmittance presented in Table 1 were the results of evaluation obtained before the heat resistance test.

**[Table 1]**

| | Composition | Visible light transmittance [%] | Δ Visible light transmittance [%] | Solar radiation transmittance [%] | Δ Solar radiation transmittance [%] |
|---|---|---|---|---|---|
| Ex. 1 | Cs₀.₃₁WO₃.₂₁ | 70.0 | -0.5 | 47.2 | -0.2 |
| Ex. 2 | Cs₀.₃₁WO₃.₂₀ | 69.7 | -0.2 | 46.9 | -0.3 |
| Ex. 3 | Cs₀.₂₉WO₃.₀₃ | 78.0 | -0.3 | 46.5 | -0.3 |
| Ex. 4 | Cs₀.₃₀WO₃.₁₃ | 78.6 | -2.2 | 46.8 | -1.4 |
| Ex. 5 | Cs₀.₃₀WO₃.₀₅ | 77.2 | -1.2 | 49.5 | -0.7 |
| Ex. 6 | Cs₀.₃₁WO₃.₀₆ | 77.0 | -1.1 | 48.2 | -0.8 |
| Ex. 7 | Li₀.₃₁WO₃.₁₆ | 69.9 | -0.6 | 48.8 | -0.3 |
| Ex. 8 | Na₀.₁₀WO₃.₁₉ | 70.0 | -0.6 | 48.4 | -0.4 |
| Ex. 9 | K₀.₂₇WO₃.₁₄ | 70.1 | -0.3 | 48.7 | -0.1 |
| Ex. 10 | Rb₀.₃₀WO₃.₁₆ | 70.2 | -0.6 | 47.8 | -0.5 |
| Ex. 11 | Cu₀.₂₄WO₃.₁₄ | 70.4 | -0.4 | 50.1 | -0.3 |
| Ex. 12 | Ag₀.₀₁WO₃.₁₆ | 70.5 | -0.5 | 49.0 | -0.2 |
| Ex. 13 | Ca₀.₀₉WO₃.₁₄ | 70.2 | 0.2 | 48.1 | 0.2 |
| Ex. 14 | Sr₀.₀₁WO₃.₁₆ | 70.0 | 0.2 | 49.7 | 0.0 |
| Ex. 15 | Ba₀.₁₄WO₃. ₁₄ | 70.5 | -0.7 | 48.9 | -0.3 |
| Ex. 16 | In₀.₀₂WO₃.₁₈ | 70.3 | -0.3 | 48.4 | -0.2 |
| Ex. 17 | Tl₀.₁₉WO₃.₁₉ | 70.4 | 0.2 | 49.5 | 0.1 |
| Ex. 18 | Sn₀.₁₉WO₃.₁₆ | 70.5 | -0.5 | 48.7 | -0. 5 |
| Ex. 19 | Yb₀.₁₈WO₃.₁₆ | 69.9 | 0.4 | 49.4 | 0.2 |
| Ex. 20 | Si₀.₀₄WO₃.₁₄ | 69.8 | 0.3 | 49.2 | 0.2 |
| Comp. Ex. 1 | Cs₀.₃₂WO₂.₆₅ | 70.0 | 1.1 | 35.7 | 1.3 |

**[Table 2]**

| | Composition | Crystallite size [nm] | a-axis [angstrom] | c-axis [angstrom] |
|---|---|---|---|---|
| Ex. 1 | Cs₀.₃₁WO₃.₂₁ | 25 | 7.4099 | 7.6090 |
| Ex. 2 | Cs₀.₃₁WO₃.₂₀ | 25 | 7.4102 | 7.5959 |
| Ex. 3 | Cs₀.₂₉WO₃.₀₃ | 25 | 7.4148 | 7.5995 |
| Ex. 4 | Cs₀.₃₀WO₃.₁₃ | 22 | 7.4116 | 7.5955 |
| Ex. 5 | Cs₀.₃₀WO₃.₀₅ | 19 | 7.4137 | 7 . 6029 |
| Ex. 6 | Cs₀.₃₁WO₃.₀₆ | 17 | 7.4149 | 7.5997 |
| Comp. Ex. 1 | Cs₀.₃₂WO₂.₆₅ | 9 | 7.4061 | 7 . 6253 |

### [Example 2]

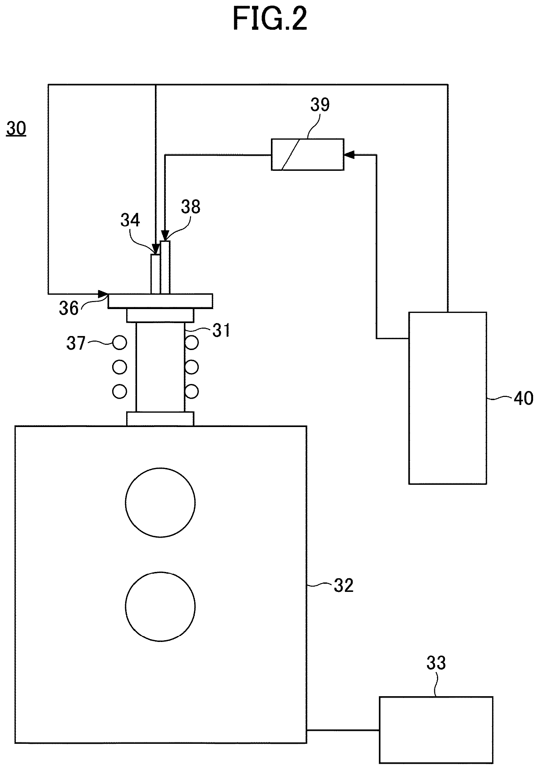

Using a high-frequency plasma reactor 30 illustrated in FIG. 2, solar radiation shielding function material particles were prepared.

The high-frequency plasma reactor 30 includes a water-cooling quartz double tube 31, and a reaction chamber 32 coupled to the water-cooling quartz double tube 31. A vacuum pumping device 33 is coupled to the reaction chamber 32.

A plasma generation gas feeding port 34 is provided above the water-cooling quartz double tube 31.

It is possible to feed a sheath gas for high-frequency plasma generation and quartz tube protection along the internal wall of the water-cooling quartz double tube 31. A sheath gas introducing port 36 is provided in a flange above the water-cooling quartz double tube 31.

A water-cooling copper coil 37 for high-frequency plasma generation is provided around the water-cooling quartz double tube 31.

A raw material powder carrier gas feeding port 38 is provided near the plasma generation gas feeding port 34, and is coupled through a duct to a raw material powder feeding device 39 configured to feed a raw material powder.

The plasma generation gas feeding port 34, the sheath gas introducing port 36, and the raw material powder feeding device 39 are coupled to a gas feeding device 40 through ducts, and a predetermined gas can be fed to each member from the gas feeding device 40. Feeding ports may be provided in any portions other than the members described above and may be coupled to the gas feeding device 40, such that the members in the device can be cooled or put under a predetermined atmosphere.

In the present Example, first, an argon gas of 30 L/min was flowed through the plasma generation gas feeding port 34, and an argon gas and a hydrogen gas were mixed at a flow rate ratio of 40 L/min to 3 L/min and fed spirally through the sheath gas introducing port 36, to generate a high-frequency plasma. Here, the high-frequency power supply input was set to 45 kW.

Next, using a mixture gas of an argon gas of 3 L/min and an oxygen gas of 0.01 L/min as a carrier gas, the raw material mixture prepared in Example 1 was fed into the plasma at a rate of 2 g/min from the raw material powder feeding device 39.

As a result, the particle diameter of the solar radiation shielding function material particles recovered at the bottom of the reaction chamber 32 was found to be 10 nm or greater and 50 nm or less by TEM observation.

An X-ray diffraction pattern of the obtained solar radiation shielding function material particles of Example 2 was measured by powder X-ray diffractometry (Θ-2Θ method). Determination of a crystal structure contained in the particles based on the obtained X-ray diffraction pattern confirmed the same peak as that of hexagonal Cs₀.₃WO₃.

A dispersion liquid and a laminated structure were produced in the same manner as in Example 1, except that the solar radiation shielding function material particles of Example 2 were used, and the laminated structure was evaluated in the same manner as in Example 1.

The results are presented in Table 1 and Table 2.

### [Example 3]

Solar radiation shielding function material particles of Example 3 were produced in the same manner as in Example 2, except that unlike in Example 2, a mixture gas of an argon gas of 5 L/min and an oxygen gas of 0.01 L/min was used as a carrier gas. Then, a dispersion liquid and a laminated structure were produced in the same manner as in Example 1, except that the solar radiation shielding function material particles of Example 3 were used, and the laminated structure was evaluated in the same manner as in Example 1.

The results are presented in Table 1 and Table 2.

### [Example 4]

Solar radiation shielding function material particles of Example 4 were produced in the same manner as in Example 2, except that a mixture gas of an argon gas of 4 L/min and an oxygen gas of 0.01 L/min was used as a carrier gas. Then, a dispersion liquid and a laminated structure were produced in the same manner as in Example 1, except that the solar radiation shielding function material particles of Example 4 were used, and the laminated structure was evaluated in the same manner as in Example 1.

The results are presented in Table 1 and Table 2.

### [Example 5]

Solar radiation shielding function material particles of Example 5 were produced in the same manner as in Example 2, except that a mixture gas of an argon gas of 5 L/min and an oxygen gas of 0.02 L/min was used as a carrier gas. Then, a dispersion liquid and a laminated structure were produced in the same manner as in Example 1, except that the solar radiation shielding function material particles of Example 5 were used, and the laminated structure was evaluated in the same manner as in Example 1.

The results are presented in Table 1 and Table 2.

### [Example 6]

Solar radiation shielding function material particles of Example 6 were produced in the same manner as in Example 2, except that a mixture gas of an argon gas of 4.5 L/min and an oxygen gas of 0.02 L/min was used as a carrier gas, and the raw material mixture prepared in Example 1 was fed into the plasma at a rate of 2.5 g/min. Then, a dispersion liquid and a laminated structure were produced in the same manner as in Example 1, except that the solar radiation shielding function material particles of Example 6 were used, and the laminated structure was evaluated in the same manner as in Example 1.

The results are presented in Table 1 and Table 2.

### [Example 7]

Li₂CO₃ (6.65 g) was dissolved in water (50 g), and the resulting product was added to H₂WO₄ (150 g). The resulting product was sufficiently stirred, and dried, to obtain a raw material mixture of Example 7.

Solar radiation shielding function material particles of Example 7 were produced by the same operation as in Example 2, except that the raw material mixture of Example 7 was fed into the plasma in the same manner as in Example 2. Then, a dispersion liquid and a laminated structure were produced in the same manner as in Example 1, except that the solar radiation shielding function material particles of Example 7 were used, and the laminated structure was evaluated in the same manner as in Example 1.

The results are presented in Table 1.

### [Example 8]

Na₂CO₃ (2.74 g) was dissolved in water (43 g), and the resulting product was added to H₂WO₄ (130 g). The resulting product was sufficiently stirred, and dried, to obtain a raw material mixture of Example 8.

Solar radiation shielding function material particles of Example 8 were produced by the same operation as in Example 2, except that the raw material mixture of Example 8 was fed into the plasma in the same manner as in Example 2. Then, a dispersion liquid and a laminated structure were produced in the same manner as in Example 1, except that the solar radiation shielding function material particles of Example 8 were used, and the laminated structure was evaluated in the same manner as in Example 1.

The results are presented in Table 1.

### [Example 9]

K₂CO₃ (13.43 g) was dissolved in water (59 g), and the resulting product was added to H₂WO₄ (180 g). The resulting product was sufficiently stirred, and dried, to obtain a raw material mixture of Example 9.

Solar radiation shielding function material particles of Example 9 were produced by the same operation as in Example 2, except that the raw material mixture of Example 9 was fed into the plasma in the same manner as in Example 2. Then, a dispersion liquid and a laminated structure were produced in the same manner as in Example 1, except that the solar radiation shielding function material particles of Example 9 were used, and the laminated structure was evaluated in the same manner as in Example 1.

The results are presented in Table 1.

### [Example 10]

Rb₂CO₃ (22.17 g) was dissolved in water (50 g), and the resulting product was added to H₂WO₄ (150 g). The resulting product was sufficiently stirred, and dried, to obtain a raw material mixture of Example 10.

Solar radiation shielding function material particles of Example 10 were produced by the same operation as in Example 2, except that the raw material mixture of Example 10 was fed into the plasma in the same manner as in Example 2. Then, a dispersion liquid and a laminated structure were produced in the same manner as in Example 1, except that the solar radiation shielding function material particles of Example 10 were used, and the laminated structure was evaluated in the same manner as in Example 1.

The results are presented in Table 1.

### [Example 11]

Cu(NO₃)₂·3H₂O (30.16 g) was dissolved in water (40 g), and the resulting product was added to H₂WO₄ (120 g). The resulting product was sufficiently stirred, and dried, to obtain a raw material mixture of Example 11.

Solar radiation shielding function material particles of Example 11 were produced by the same operation as in Example 2, except that the raw material mixture of Example 11 was fed into the plasma in the same manner as in Example 2. Then, a dispersion liquid and a laminated structure were produced in the same manner as in Example 1, except that the solar radiation shielding function material particles of Example 11 were used, and the laminated structure was evaluated in the same manner as in Example 1.

The results are presented in Table 1.

### [Example 12]

Ag₂CO₃ (0.66 g) was dissolved in water (40 g), and the resulting product was added to H₂WO₄ (120 g). The resulting product was sufficiently stirred, and dried, to obtain a raw material mixture of Example 12.

Solar radiation shielding function material particles of Example 12 were produced by the same operation as in Example 2, except that the raw material mixture of Example 12 was fed into the plasma in the same manner as in Example 2. Then, a dispersion liquid and a laminated structure were produced in the same manner as in Example 1, except that the solar radiation shielding function material particles of Example 12 were used, and the laminated structure was evaluated in the same manner as in Example 1.

The results are presented in Table 1.

### [Example 13]

CaCO₃ (6.42 g) was dissolved in water (53 g), and the resulting product was added to H₂WO₄ (160 g). The resulting product was sufficiently stirred, and dried, to obtain a raw material mixture of Example 13.

Solar radiation shielding function material particles of Example 13 were produced by the same operation as in Example 2, except that the raw material mixture of Example 13 was fed into the plasma in the same manner as in Example 2. Then, a dispersion liquid and a laminated structure were produced in the same manner as in Example 1, except that the solar radiation shielding function material particles of Example 13 were used, and the laminated structure was evaluated in the same manner as in Example 1.

The results are presented in Table 1.

### [Example 14]

SrCO₃ (8.50 g) was dissolved in water (59 g), and the resulting product was added to H₂WO₄ (180 g). The resulting product was sufficiently stirred, and dried, to obtain a raw material mixture of Example 14.

Solar radiation shielding function material particles of Example 14 were produced by the same operation as in Example 2, except that the raw material mixture of Example 14 was fed into the plasma in the same manner as in Example 2. Then, a dispersion liquid and a laminated structure were produced in the same manner as in Example 1, except that the solar radiation shielding function material particles of Example 14 were used, and the laminated structure was evaluated in the same manner as in Example 1.

The results are presented in Table 1.

### [Example 15]

BaCO₃ (13.26 g) was dissolved in water (40 g), and the resulting product was added to H₂WO₄ (120 g). The resulting product was sufficiently stirred, and dried, to obtain a raw material mixture of Example 15.

Solar radiation shielding function material particles of Example 15 were produced by the same operation as in Example 2, except that the raw material mixture of Example 15 was fed into the plasma in the same manner as in Example 2. Then, a dispersion liquid and a laminated structure were produced in the same manner as in Example 1, except that the solar radiation shielding function material particles of Example 15 were used, and the laminated structure was evaluated in the same manner as in Example 1.

The results are presented in Table 1.

### [Example 16]

In₂O₃ (1.67 g) and H₂WO₄ (150 g) were sufficiently mixed using a grinding machine, to obtain a raw material mixture of Example 16.

Solar radiation shielding function material particles of Example 16 were produced by the same operation as in Example 2, except that the raw material mixture of Example 16 was fed into the plasma in the same manner as in Example 2. Then, a dispersion liquid and a laminated structure were produced in the same manner as in Example 1, except that the solar radiation shielding function material particles of Example 16 were used, and the laminated structure was evaluated in the same manner as in Example 1.

The results are presented in Table 1.

### [Example 17]

TlNO₃ (12.15 g) was dissolved in water (180 g), and the resulting product was added to H₂WO₄ (60 g). The resulting product was sufficiently stirred, and dried, to obtain a raw material mixture of Example 17.

Solar radiation shielding function material particles of Example 17 were produced by the same operation as in Example 2, except that the raw material mixture of Example 17 was fed into the plasma in the same manner as in Example 2. Then, a dispersion liquid and a laminated structure were produced in the same manner as in Example 1, except that the solar radiation shielding function material particles of Example 17 were used, and the laminated structure was evaluated in the same manner as in Example 1.

The results are presented in Table 1.

### [Example 18]

SnO₂ (17.18 g) and H₂WO₄ (150 g) were sufficiently mixed using a grinding machine, to obtain a raw material mixture of Example 18.

Solar radiation shielding function material particles of Example 18 were produced by the same operation as in Example 2, except that the raw material mixture of Example 18 was fed into the plasma in the same manner as in Example 2. Then, a dispersion liquid and a laminated structure were produced in the same manner as in Example 1, except that the solar radiation shielding function material particles of Example 18 were used, and the laminated structure was evaluated in the same manner as in Example 1.

The results are presented in Table 1.

### [Example 19]

Yb₂O₃ (17.98 g) and H₂WO₄ (120 g) were sufficiently mixed using a grinding machine, to obtain a raw material mixture of Example 19.

Solar radiation shielding function material particles of Example 19 were produced by the same operation as in Example 2, except that the raw material mixture of Example 19 was fed into the plasma in the same manner as in Example 2. Then, a dispersion liquid and a laminated structure were produced in the same manner as in Example 1, except that the solar radiation shielding function material particles of Example 19 were used, and the laminated structure was evaluated in the same manner as in Example 1.

The results are presented in Table 1.

### [Example 20]

SNOWTEX S obtained from Nissan Chemical Corporation (17.25 g) and H₂WO₄ (150 g) were sufficiently mixed using a grinding machine, and then dried, to obtain a raw material mixture of Example 20.

Solar radiation shielding function material particles of Example 20 were produced by the same operation as in Example 2, except that the raw material mixture of Example 20 was fed into the plasma in the same manner as in Example 2. Then, a dispersion liquid and a laminated structure were produced in the same manner as in Example 1, except that the solar radiation shielding function material particles of Example 20 were used, and the laminated structure was evaluated in the same manner as in Example 1.

The results are presented in Table 1.

### [Comparative Example 1]

Cesium carbonate (Cs₂CO₃) (55.45 g) was dissolved in water (50 g), to obtain a solution. The solution was added to tungstic acid (H₂WO₄) (286 g). The resulting product was sufficiently stirred and mixed, and then dried while being stirred. The mole ratio between W and Cs in the dried product was W:Cs=1:0.33.

The dried product was fired in a 5% H₂ gas atmosphere in which an N₂ gas was used as a carrier gas at 800°C for 5.5 hours. Subsequently, the gas to be fed was changed to only the N₂ gas, and the temperature was lowered to room temperature, to obtain cesium tungsten oxide particles, which were solar radiation shielding function material particles of Comparative Example 1.

An X-ray diffraction pattern of the obtained solar radiation shielding function material particles of Comparative Example 1 was measured by powder X-ray diffractometry (Θ-2Θ method). Determination of a crystal structure contained in the particles based on the obtained X-ray diffraction pattern confirmed the same peak as that of hexagonal Cs_{0.3}WO₃. The solar radiation shielding function material particles of Comparative Example 1 were coarser than the particles a obtained in Example 1.

The solar radiation shielding function material particles of Comparative Example 1, which were weighed out to 5% by weight, a polymeric dispersant weighed out to 5% by weight, and dipropylene glycol monomethyl ether weighed out to 90% by weight were loaded into a paint shaker (obtained from Asada Co., Ltd.) filled with ZrO₂ beads having a diameter of 0.3 mm, and pulverized and dispersed for 20 hours, to prepare a solar radiation shielding function material particle dispersion liquid of Comparative Example 1. A laminated structure was produced in the same manner as in Example 1, except that the solar radiation shielding function material particle dispersion liquid of Comparative Example 1 was used, and evaluated in the same manner as in Example 1. The evaluation results are presented in Table 1.

The crystallite size and lattice constants of the complex tungsten oxide particles, which were the solar radiation shielding function material particles obtained after the solvent was removed from the solar radiation shielding function material particle dispersion liquid of Comparative Example 1, were measured. The crystallite size was 9 nm.

The evaluation results are presented in Table 1 and Table 2.

### (Conclusion)

As clear from Table 1, in the solar radiation shielding function material particles of Example 1 to Example 20, z and y in the General Formula: MₓW_{y}O_{z} of the complex tungsten oxide contained in the particles satisfied the relationship of 3.0<z/y. It was also successfully confirmed that the laminated structures of Example 1 to Example 20 had excellent weather resistance, with the Δ values of both of the visible light transmittance and the solar radiation transmittance being 1.0% or less.

As presented in Table 1, it was successfully confirmed that the laminated structures of Example 1 to Example 20 had a solar radiation transmittance of 50% or lower when the visible light transmittance was approximately 70%. That is, it was successfully confirmed that the laminated structures of Example 1 to Example 20 had near infrared absorbability and visible light transmissivity that were sufficient.

The laminated structure for solar radiation shielding has been described above by way of embodiments and Examples. The present invention is not limited to the embodiments and Examples described above. Various modifications and changes can be made within the scope of the spirit of the present invention described in the claims.

The present application claims priority under Japanese Patent Application No. 2020-215132 filed with the Japan Patent Office on December 24, 2020, and the entire contents of Japanese Patent Application No. 2020-215132 are incorporated herein by reference.

### DESCRIPTION OF THE REFERENCE NUMERALS

501 to 508: laminated structure for solar radiation shielding
51, 70: laminated plate
521 to 528: intermediate layer
611: solar radiation shielding function material particles
612, 631: synthetic resin
622: intermediate film

## Claims

1. A laminated structure for solar radiation shielding, the laminated structure comprising:
two laminated plates selected from glass plates and plate-shaped plastics; and
an intermediate layer provided between the two laminated plates,
wherein one or more members selected from the laminated plates and the intermediate layer contain solar radiation shielding function material particles, and
the solar radiation shielding function material particles contain particles of a complex tungsten oxide represented by General Formula: MₓW_{y}O_{z} (where an element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W represents tungsten, O represents oxygen, 0.001≤x/y≤1, and 3.0<z/y).

2. The laminated structure for solar radiation shielding according to claim 1,
wherein the element M contains one or more elements selected from Cs, Rb, K, Tl, In, Ba, Li, Ca, Sr, Fe, and Sn.

3. The laminated structure for solar radiation shielding according to claim 1 or 2,
wherein the particles of the complex tungsten oxide contain a crystal having one or more crystal structures selected from a hexagonal crystal, a tetragonal crystal, and a cubic crystal.

4. The laminated structure for solar radiation shielding according to any one of claims 1 to 3,
wherein the element M contains one or more elements selected from Cs and Rb,
the complex tungsten oxide has a hexagonal crystal structure, and
a lattice constant of a-axis of the complex tungsten oxide is 7.3850 angstroms or greater and 7.4186 angstroms or less, and a lattice constant of c-axis of the complex tungsten oxide is 7.5600 angstroms or greater and 7.6240 angstroms or less.

5. The laminated structure for solar radiation shielding according to any one of claims 1 to 4,
wherein the intermediate layer includes at least one intermediate film containing a synthetic resin, and
the intermediate layer includes, as the intermediate film, at least one solar radiation shielding intermediate film containing the synthetic resin and the solar radiation shielding function material particles provided in the synthetic resin.

6. The laminated structure for solar radiation shielding according to any one of claims 1 to 4,
wherein the intermediate layer includes at least one intermediate film containing a synthetic resin, and
the intermediate layer includes, as the intermediate film,
a supporting intermediate film containing the synthetic resin, and
a solar radiation shielding intermediate film formed on at least one surface of the supporting intermediate film and containing the synthetic resin and the solar radiation shielding function material particles provided in the synthetic resin.

7. The laminated structure for solar radiation shielding according to claim 6,
wherein the supporting intermediate film is a resin film having ductility.

8. The laminated structure for solar radiation shielding according to any one of claims 1 to 4,
wherein the intermediate layer includes at least one intermediate film containing a synthetic resin, and
the intermediate layer includes, as the intermediate film, a solar radiation shielding intermediate film, which is a resin film having ductility, and which contains the solar radiation shielding function material particles in the resin film.

9. The laminated structure for solar radiation shielding according to any one of claims 5 to 8,
wherein the synthetic resin is a vinyl-based resin or an ionomer resin.

10. The laminated structure for solar radiation shielding according to any one of claims 1 to 9,
wherein the plate-shaped plastics contain one or more resins selected from polycarbonate resins, acrylic resins, and polyethylene terephthalate resins.

## Amended claims

### Amended claims under Art. 19.1 PCT

**1.** (Amended) A laminated structure for solar radiation shielding, the laminated structure comprising:
two laminated plates selected from glass plates and plate-shaped plastics; and
an intermediate layer provided between the two laminated plates,
wherein one or more members selected from the laminated plates and the intermediate layer contain solar radiation shielding function material particles, and
the solar radiation shielding function material particles contain particles of a complex tungsten oxide represented by General Formula: MₓW_{y}O_{z} (where an element M is one or more elements selected from H, He, alkali metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I, W represents tungsten, O represents oxygen, 0.001≤x/y≤1, and 3.0<z/y<3.4).

**2.** The laminated structure for solar radiation shielding according to claim 1,
wherein the element M contains one or more elements selected from Cs, Rb, K, Tl, In, Ba, Li, Ca, Sr, Fe, and Sn.

**3.** The laminated structure for solar radiation shielding according to claim 1 or 2,
wherein the particles of the complex tungsten oxide contain a crystal having one or more crystal structures selected from a hexagonal crystal, a tetragonal crystal, and a cubic crystal.

**4.** The laminated structure for solar radiation shielding according to any one of claims 1 to 3,
wherein the element M contains one or more elements selected from Cs and Rb,
the complex tungsten oxide has a hexagonal crystal structure, and
a lattice constant of a-axis of the complex tungsten oxide is 7.3850 angstroms or greater and 7.4186 angstroms or less, and a lattice constant of c-axis of the complex tungsten oxide is 7.5600 angstroms or greater and 7.6240 angstroms or less.

**5.** The laminated structure for solar radiation shielding according to any one of claims 1 to 4,
wherein the intermediate layer includes at least one intermediate film containing a synthetic resin, and
the intermediate layer includes, as the intermediate film, at least one solar radiation shielding intermediate film containing the synthetic resin and the solar radiation shielding function material particles provided in the synthetic resin.

**6.** The laminated structure for solar radiation shielding according to any one of claims 1 to 4,
wherein the intermediate layer includes at least one intermediate film containing a synthetic resin, and
the intermediate layer includes, as the intermediate film,
a supporting intermediate film containing the synthetic resin, and
a solar radiation shielding intermediate film formed on at least one surface of the supporting intermediate film and containing the synthetic resin and the solar radiation shielding function material particles provided in the synthetic resin.

**7.** The laminated structure for solar radiation shielding according to claim 6,
wherein the supporting intermediate film is a resin film having ductility.

**8.** The laminated structure for solar radiation shielding according to any one of claims 1 to 4,
wherein the intermediate layer includes at least one intermediate film containing a synthetic resin, and
the intermediate layer includes, as the intermediate film, a solar radiation shielding intermediate film, which is a resin film having ductility, and which contains the solar radiation shielding function material particles in the resin film.

**9.** The laminated structure for solar radiation shielding according to any one of claims 5 to 8,
wherein the synthetic resin is a vinyl-based resin or an ionomer resin.

**10.** The laminated structure for solar radiation shielding according to any one of claims 1 to 9,
wherein the plate-shaped plastics contain one or more resins selected from polycarbonate resins, acrylic resins, and polyethylene terephthalate resins.

Statement under Art. 19.1 PCT
1. Content of Amendment
In claim 1, the defined condition "3.0<z/y" was changed to "3.0<z/y<3.4", to make an amendment to add definition of an upper limit.

2. Explanation

Document 1 (KR10-1182194B1) and Document 2 (LIU, Jing-Xiao et al., MATERIALS CHARACTERIZATION, 2013, pp. 182-187) merely disclose examples in which local content ratios of elements were analyzed by RBS and XPS.

Document 3 (JP2010-228959A) and Document 4 (WO2005/087680A1) do not disclose a range of 3.0<z/y<3.4 as the range of z/y in General Formula: MₓW_{y}O_{z} in solar radiation shielding function material particles containing particles of a complex tungsten oxide represented by the General Formula.

Hence, none of the documents disclose a specific example in which the range of z/y in General Formula MₓW_{y}O_{z} is 3.0<z/y<3.4 in solar radiation shielding function material particles containing particles of a complex tungsten oxide represented by the General Formula. Moreover, none of the documents disclose that use of solar radiation shielding function material particles containing particles of a complex tungsten oxide satisfying the forgoing General Formula enables provision of a laminated structure for solar radiation shielding excellent in weather resistance.
